(19) Europäisches Patentamt / European Patent Office / Office européen des brevets

(11) **EP 4 487 951 A1**

(12) **EUROPEAN PATENT APPLICATION**
published in accordance with Art. 153(4) EPC

(43) Date of publication:
**08.01.2025  Bulletin 2025/02**

(21) Application number: **22929897.1**

(22) Date of filing: **09.06.2022**

(51) International Patent Classification (IPC):
*B01J 27/24* (2006.01)          *B01J 23/89* (2006.01)
*C01B 32/05* (2017.01)          *C01B 32/205* (2017.01)
*C25B 11/054* (2021.01)        *C25B 11/065* (2021.01)
*C25B 11/081* (2021.01)        *H01M 4/86* (2006.01)
*H01M 4/90* (2006.01)          *H01M 8/10* (2016.01)
*H01M 12/06* (2006.01)

(52) Cooperative Patent Classification (CPC):
**B01J 23/89; B01J 27/24; C01B 32/05;
C01B 32/205; C25B 11/054; C25B 11/065;
C25B 11/081; H01M 4/86; H01M 4/90; H01M 8/10;
H01M 12/06;** Y02E 60/50

(86) International application number:
**PCT/JP2022/023284**

(87) International publication number:
**WO 2023/166753 (07.09.2023 Gazette 2023/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **04.03.2022  JP 2022033943**

(71) Applicant: **Nisshinbo Holdings Inc.
Tokyo 103-8650 (JP)**

(72) Inventors:
 • **ISHIZUKA, Takuya
   Chiba-shi, Chiba 267-0056 (JP)**

 • **SATO, Tetsutaro
   Chiba-shi, Chiba 267-0056 (JP)**
 • **KISHIMOTO, Takeaki
   Chiba-shi, Chiba 267-0056 (JP)**
 • **KOBAYASHI, Yoshikazu
   Chiba-shi, Chiba 267-0056 (JP)**
 • **KATAGIRI, Noriaki
   Chiba-shi, Chiba 267-0056 (JP)**
 • **ICHIKAWA, Akira Faxon
   Chiba-shi, Chiba 267-0056 (JP)**

(74) Representative: **Vossius & Partner
Patentanwälte Rechtsanwälte mbB
Siebertstrasse 3
81675 München (DE)**

(54) **METAL-LOADED CATALYST, ELECTRODE, AND BATTERY**

(57)     Provided are a metal-supported catalyst having both excellent durability and excellent catalytic function, while having a large noble metal content, an electrode, and a battery. The metal-supported catalyst is a metal-supported catalyst, including: a carbon carrier; and catalyst metal particles supported on the carbon carrier, the particles each containing a noble metal alloy, wherein a ratio of a weight of a noble metal to a weight of the metal-supported catalyst is 35 wt% or more, wherein the metal-supported catalyst has a BET specific surface area of 350 (m²/g-carbon carrier) or more, and wherein the metal-supported catalyst has the following characteristic (a1) and/or (a2): (a1) a ratio of an intensity of a 2D band having a peak top in a vicinity of a Raman shift of 2,680 cm⁻¹ to an intensity of a G band having a peak top in a vicinity of a Raman shift of 1,600 cm⁻¹ in a Raman spectrum obtained by Raman spectroscopy is 0.20 or more and 1.00 or less; and (a2) a half width at half maximum of a D band having a peak top in a vicinity of a Raman shift of 1,340 cm⁻¹ in the Raman spectrum obtained by the Raman spectroscopy is 41.0 cm⁻¹ or less, and the following characteristic (b1) and/or (b2): (b1) an alloy composition nonuniformity is 0.55 or less: (b2) a half-maximum asymmetry and a 1/4-maximum asymmetry are each 0.55 or less.

# FIG.1

**Description**

Technical Field

The present invention relates to a metal-supported catalyst, an electrode, and a battery.

Background Art

In Patent Literature 1, there is a description of a catalyst for the air electrode of a polymer electrolyte fuel cell in which catalyst particles obtained by alloying platinum and one auxiliary metal are supported on a carbon powder carrier, the catalyst being characterized in that the auxiliary metal is iron or cobalt, and a blending ratio between platinum and the auxiliary metal is from 6:1 to 3:2 (molar ratio).

In Patent Literature 2, there is a description of an electrode catalyst for a fuel cell, the catalyst including: a solid carbon carrier; and an alloy of platinum and cobalt supported on the carrier.

In Patent Literature 3, there is a description of an electrode catalyst obtained by supporting a catalyst metal on a catalyst carrier, in which the catalyst metal contains platinum and a metal component except platinum, and has mesopores each having a radius of 1 nm or more, in which the mode radius of the pore distribution of the mesopores is 1 nm or more and less than 2.5 nm, in which alloy fine particles each containing platinum and the metal component except platinum are supported in the mesopores, and in which the content molar ratio of platinum to the metal component except platinum in each of the alloy fine particles supported in the mesopores is from 1.0 to 10.0.

In Patent Literature 4, there is a description of an electrode catalyst obtained by supporting a catalyst component, which contains alloy fine particles that are each formed of platinum and a metal component other than platinum, on a catalyst carrier, the electrode catalyst being characterized in that the catalyst carrier has mesopores each having a radius of 1 nm or more, that the mode radius of the pore distribution of the mesopores is 1 nm or more and less than 2.5 nm, that at least part of the alloy fine particles are supported in the mesopores, and that the measured value Q [Å] of the lattice constant of each of the alloy fine particles is smaller than the theoretical value P [Å] of the lattice constant thereof following Vegard's law, the theoretical value being calculated from the following equation: theoretical value P [Å] of lattice constant= (lattice constant of platinum-lattice constant of non-platinum metal atom)×molar fraction of platinum atom in each of alloy fine particles+lattice constant of non-platinum metal atom.

In Patent Literature 5, there is a description of a method of producing an alloy catalyst including: a first step of mixing a noble metal compound containing a noble metal element, a base metal compound containing a base metal element, a first solvent, and a porous material to provide a mixture; a second step of removing the first solvent from the mixture until the following condition "(volume of first solvent in mixture) ≤ (pore volume of porous material)×5" is satisfied, to thereby fix the noble metal compound and the base metal compound to the porous material; and a third step of bringing a reducing solution containing a reducing agent having an oxidation-reduction potential of -1.20 V or less and a second solvent into contact with the porous material, in which the amount of substance of the reducing agent in the reducing solution is 5 or more times as large as the total amount of substance of the noble metal element.

Citation List

Patent Literature

[PTL 1] JP 2003-142112 A
[PTL 2] WO 2016/063968 A1
[PTL 3] WO 2017/183475 A1
[PTL 4] JP 2018-116815 A
[PTL 5] JP 2020-171917 A

Summary of Invention

Technical Problem

However, it has heretofore been difficult to achieve a metal-supported catalyst having both excellent durability and an excellent catalytic function, while having a large noble metal content.

The present invention has been made in view of the above-mentioned problem, and one of the objects of the present invention is to provide a metal-supported catalyst having both excellent durability and an excellent catalytic function, while having a large noble metal content, an electrode, and a battery.

Solution to Problem

In order to achieve the above-mentioned object, according to one embodiment of the present invention, there is provided a metal-supported catalyst, including: a carbon carrier; and catalyst metal particles supported on the carbon carrier, the particles each containing a noble metal alloy, wherein a ratio of a weight of a noble metal to a weight of the metal-supported catalyst is 35 wt% or more, wherein the metal-supported catalyst has a BET specific surface area of 350 ($m^2$/g-carbon carrier) or more, and wherein the metal-supported catalyst has

the following characteristic (a1) and/or (a2):

(a1) a ratio of an intensity of a 2D band having a peak top in a vicinity of a Raman shift of 2,680 $cm^{-1}$ to an intensity of a G band having a peak top in a vicinity of a Raman shift of 1,600 $cm^{-1}$ in a Raman spectrum obtained by Raman spectroscopy is 0.20 or more and 1.00 or less; and
(a2) a half width at half maximum of a D band having a peak top in a vicinity of a Raman shift of 1,340 $cm^{-1}$ in the Raman spectrum obtained by the Raman spectroscopy is 41.0 $cm^{-1}$ or less, and

the following characteristic (b1) and/or (b2):

(b1) an alloy composition nonuniformity, which is calculated from the following equation (I), is 0.55 or less:

$$\text{alloy composition nonuniformity} = (1 - \text{theoretical lattice constant} / \text{measured lattice constant}) \times 100 \text{ --> } \quad (I)$$

in the equation (I), the theoretical lattice constant and the measured lattice constant are a theoretical lattice constant and a measured lattice constant of the noble metal alloy, respectively; and
(b2) a half-maximum asymmetry and a 1/4-maximum asymmetry, which are respectively calculated from the following equation (II) and equation (III), are each 0.55 or less:

$$\text{half-maximum asymmetry} = |(D_m - D_{Lh}) - (D_{Hh} - D_m)| \quad (II)$$

$$\text{1/4-maximum asymmetry} = |(D_m - D_{Lq}) - (D_{Hq} - D_m)| \quad (III)$$

in the equation (II) and the equation (III), $D_m$ represents a value of a diffraction angle $2\theta$ at which a diffraction line exhibits a maximum intensity in a range of the diffraction angle $2\Theta$ in which a diffraction peak of a (111) plane of the noble metal alloy appears in an X-ray diffraction pattern obtained by powder X-ray diffraction, $D_{Lh}$ represents a value of a smallest diffraction angle $2\Theta$ among diffraction angles $2\theta$ at which the diffraction line exhibits an intensity equal to one half of the maximum intensity in the range, $D_{Hh}$ represents a value of a largest diffraction angle $2\Theta$ among the diffraction angles $2\Theta$ at which the diffraction line exhibits the intensity equal to one half of the maximum intensity in the range, $D_{Lq}$ represents a value of a smallest diffraction angle $2\Theta$ among diffraction angles $2\Theta$ at which the diffraction line exhibits an intensity equal to one quarter of the maximum intensity in the range, and $D_{Hq}$ represents a value of a largest diffraction angle $2\Theta$ among the diffraction angles $2\Theta$ at which the diffraction line exhibits the intensity equal to one quarter of the maximum intensity in the range. According to the embodiment of the present invention, a metal-supported catalyst having both excellent durability and an excellent catalytic function, while having a large noble metal content, is provided.
The metal-supported catalyst may have the characteristic (a1). The metal-supported catalyst may have the characteristic (a2). The metal-supported catalyst may have the characteristic (b1). The metal-supported catalyst may have the characteristic (b2) .
The metal-supported catalyst may have an average pore diameter of 8.0 nm or less. The metal-supported catalyst may have a noble metal-to-non-noble metal molar ratio of 1.0 or more.
In the metal-supported catalyst, the catalyst metal particles may have a number-average particle diameter of 8.0 nm or less. In the metal-supported catalyst, the catalyst metal particles may have a volume-average particle diameter of 8.0 nm or less.
In the metal-supported catalyst, the noble metal in the metal-supported catalyst may have a dependence of an electrochemical effective specific surface area (ECSA) on a sweep rate of 60% or more, which is calculated from the following equation (IV):

$$\text{ECSA-sweep rate dependence (\%)}= (1-\text{ECSA at 1,000 mV/ECSA at 10 mV}) \times 100 \qquad \text{(IV)}$$

in the equation (IV), the "ECSA at 1,000 mV" and the "ECSA at 10 mV" represent electrochemical effective specific surface areas ($m^2$/g-noble metal) per 1 g of the noble metal in the metal-supported catalyst, which are respectively obtained by cyclic voltammetry in which a potential is swept at a sweep rate of 1,000 mV/sec and cyclic voltammetry in which the potential is swept at a sweep rate of 10 mV/sec, using a rotating ring-disk electrode apparatus having a working electrode carrying the metal-supported catalyst.

In order to achieve the above-mentioned object, according to one embodiment of the present invention, there is provided an electrode, including any one of the metal-supported catalysts described above. According to the embodiment of the present invention, an electrode having excellent characteristics is provided.

In order to achieve the above-mentioned object, according to one embodiment of the present invention, there is provided a battery, including the electrode described above. According to the embodiment of the present invention, a battery having excellent characteristics is provided.

Advantageous Effects of Invention

According to the present invention, a metal-supported catalyst having both excellent durability and an excellent catalytic function, while having a large noble metal content, an electrode, and a battery, are provided.

Brief Description of Drawings

FIG. 1 is an explanatory figure showing an example of the result of analysis of a Raman spectrum obtained by Raman spectroscopy of a metal-supported catalyst in Example according to an embodiment of the present invention.

FIG. 2 is an explanatory figure showing a typical X-ray diffraction pattern obtained by powder X-ray diffraction of the metal-supported catalyst.

FIG. 3A is an explanatory figure showing an example of the result of analysis of an X-ray diffraction pattern obtained by powder X-ray diffraction of the metal-supported catalyst in Example according to an embodiment of the present invention.

FIG. 3B is an explanatory figure showing another example of the result of analysis of the X-ray diffraction pattern obtained by powder X-ray diffraction of the metal-supported catalyst in Example according to the embodiment of the present invention.

FIG. 4A is an explanatory figure showing an example of the result of analysis of an X-ray diffraction pattern obtained by powder X-ray diffraction of the metal-supported catalyst in Example according to an embodiment of the present invention.

FIG. 4B is an explanatory figure showing another example of the result of analysis of the X-ray diffraction pattern obtained by powder X-ray diffraction of the metal-supported catalyst in Example according to the embodiment of the present invention.

FIG. 5A is an explanatory figure showing an example of the result of analysis of an X-ray diffraction pattern obtained by powder X-ray diffraction of the metal-supported catalyst in Example according to an embodiment of the present invention.

FIG. 5B is an explanatory figure showing another example of the result of analysis of the X-ray diffraction pattern obtained by powder X-ray diffraction of the metal-supported catalyst in Example according to the embodiment of the present invention.

FIG. 5C is an explanatory figure showing still another example of the result of analysis of the X-ray diffraction pattern obtained by powder X-ray diffraction of the metal-supported catalyst in Example according to the embodiment of the present invention.

FIG. 5D is an explanatory figure showing part of the X-ray diffraction pattern shown in FIG. 5C in an enlarged manner.

FIG. 6A is an explanatory figure showing still another example of the result of analysis of the X-ray diffraction pattern obtained by powder X-ray diffraction of the metal-supported catalyst in Example according to an embodiment of the present invention.

FIG. 6B is an explanatory figure showing part of the X-ray diffraction pattern shown in FIG. 6A in an enlarged manner.

FIG. 7 is an explanatory figure showing an example of the result of evaluation of the ECSA-sweep rate dependence of the metal-supported catalyst in Example according to an embodiment of the present invention.

FIG. 8A is an explanatory diagram for illustrating an equivalent circuit.

FIG. 8B is an explanatory figure showing the measured values of Nyquist plots obtained for the metal-supported catalyst in Example according to an embodiment of the present invention and the result of their fitting.

FIG. 9A is an explanatory figure showing conditions for the production of the metal-supported catalyst and the results of evaluations of the characteristics of a fuel cell including the metal-supported catalyst in Examples according to an embodiment of the present invention.

FIG. 9B is an explanatory figure showing the results of evaluations of the characteristics of the metal-supported catalyst in Examples according to the embodiment of the present invention.

Description of Embodiments

One of the embodiments of the present invention will be described below. The present invention is not limited to examples described in the embodiment.

A metal-supported catalyst according to an embodiment of the present invention (hereinafter referred to as "catalyst of the present invention") includes: a carbon carrier; and catalyst metal particles supported on the carbon carrier, the particles each containing a noble metal alloy.

The carbon carrier in the catalyst of the present invention is a carbon material mainly including carbon. The carbon content of the carbon carrier may be, for example, 70 wt% or more, and is preferably 75 wt% or more, more preferably 80 wt% or more, and particularly preferably 85 wt% or more.

The carbon content of the carbon carrier may be, for example, 100 wt% or less, 95 wt% or less, or 90 wt% or less. The carbon content of the carbon carrier may be specified by arbitrarily combining any one of the above-mentioned lower limit values and any one of the above-mentioned upper limit values. The carbon content of the carbon carrier is obtained by elemental analysis (combustion method).

The carbon carrier is preferably a carbonized material. The carbonized material is obtained by carbonizing a raw material containing an organic substance. The content of the organic substance in the raw material to be carbonized may be, for example, 5 wt% or more and 90 wt% or less, and is preferably 10 wt% or more and 80 wt% or less.

The organic substance in the raw material is not particularly limited as long as the organic substance can be carbonized. An organic compound in the organic substance may be a polymer (e.g., a thermosetting resin and/or a thermoplastic resin), and/or may be an organic compound having a smaller molecular weight.

The carbon carrier preferably contains nitrogen. That is, the carbon carrier preferably contains a nitrogen atom in its carbon structure. The carbon carrier containing nitrogen is preferably a carbonized material containing nitrogen. The nitrogen-containing carbonized material is obtained by, for example, carbonizing a raw material containing a nitrogen-containing organic substance. The nitrogen-containing organic substance preferably contains a nitrogen-containing organic compound. The nitrogen-containing organic compound is not particularly limited as long as the organic compound contains a nitrogen atom in its molecule. In addition, the nitrogen in the carbon carrier may be nitrogen introduced by nitrogen doping treatment.

The nitrogen content of the carbon carrier may be, for example, 0.10 wt% or more, and is preferably 0.15 wt% or more, more preferably 0.20 wt% or more, still more preferably 0.25 wt% or more, and particularly preferably 0.30 wt% or more. The nitrogen content of the carbon carrier may be, for example, 10.00 wt% or less. The nitrogen content of the carbon carrier is obtained by the elemental analysis (combustion method) of the carbon carrier.

The carbon carrier is preferably a carbonized material obtained by carbonizing a raw material containing an organic substance and a metal. In this case, the carbon carrier may be a carbonized material subjected to metal removal treatment after the carbonization. The metal removal treatment is treatment for reducing the amount of a raw material-derived metal in the carbonized material. Specifically, the metal removal treatment is preferably, for example, washing treatment with an acid and/or electrolytic treatment.

When the carbon carrier is a carbonized material obtained by carbonizing a raw material containing an organic substance and a metal, the carbon carrier may contain the metal derived from the raw material to be carbonized (hereinafter referred to as "raw material metal"). In this case, the carbon carrier contains the raw material metal inside a skeleton forming a porous structure thereof. Even when the carbon carrier is the carbonized material produced through the metal removal treatment as described above, the raw material metal remains inside the skeleton of the carbon carrier. The weight of the raw material metal inside the skeleton of the carbon carrier, among the raw material metals in the carbon carrier, may be larger than the weight of the raw material metal in the surface of the skeleton of the carbon carrier.

The raw material metal inside the skeleton of the carbon carrier may be detected by, for example, subjecting the skeleton to surface etching treatment and analyzing a cross-section exposed by the etching treatment. That is, in this case, when one particle of the carbon carrier is subjected to etching treatment, the raw material metal is detected in the cross-section of the particle exposed by the etching treatment. The raw material metal in the carbon carrier may be detected by, for example, inductively coupled plasma optical emission spectrometry of the carbon carrier.

The raw material metal content of the carbon carrier (proportion of the weight of the raw material metal in the carbon carrier to the weight of the carbon carrier) may be, for example, 0.001 wt% or more, 0.005 wt% or more, 0.01 wt% or more, or 0.02 wt% or more. The raw material metal content of the carbon carrier may be, for example, 5 wt% or less, 4 wt% or less, 3 wt% or less, 2 wt% or less, 1 wt% or less, 0.8 wt% or less, or 0.5 wt% or less. The raw material metal content of the carbon carrier may be specified by arbitrarily combining any one of the above-mentioned lower limit values and any one of the above-mentioned upper limit values. The raw material metal content of the carbon carrier is obtained by, for example, inductively coupled plasma optical emission spectrometry of the carbon carrier.

The raw material metal is preferably a transition metal. That is, the raw material metal is preferably a transition metal belonging to Groups III to XII in the periodic table, and particularly preferably a transition metal belonging to the fourth period of Groups III to XII in the periodic table.

The raw material metal may be a transition metal except platinum. In addition, the raw material metal may be a transition metal except noble metals (e.g., ruthenium (Ru), palladium (Pd), rhodium (Rh), silver (Ag), osmium (Os), iridium (Ir), platinum (Pt), and gold (Au)).

Specifically, the raw material metal may be, for example, one or more selected from the group consisting of: scandium (Sc); titanium (Ti); vanadium (V); chromium (Cr); manganese (Mn); iron (Fe); cobalt (Co); nickel (Ni); copper (Cu); zinc (Zn); yttrium (Y); zirconium (Zr); niobium (Nb); molybdenum (Mo); ruthenium (Ru); rhodium (Rh); palladium (Pd); silver (Ag); lanthanoids (e.g., gadolinium (Gd)); and actinoids, and is preferably one or more selected from the group consisting of: Fe; Co; Ni; Cu; and Zn, more preferably one or more selected from the group consisting of: Fe; Co; Ni; and Zn, and particularly preferably one or more selected from the group consisting of: Co; Ni; and Zn.

The carbonization in the production of the carbonized material is performed by heating the raw material at the temperature at which the organic substance in the raw material is carbonized. A carbonizing temperature is not particularly limited as long as the raw material is carbonized at the temperature. For example, the carbonizing temperature is preferably 1,200°C or more, more preferably 1,300°C or more, still more preferably 1,400°C or more, and particularly preferably 1,500°C or more.

The carbonizing temperature may be, for example, 3,000°C or less, and is preferably 2,500°C or less, and particularly preferably 2,000°C or less. The carbonizing temperature may be specified by arbitrarily combining any one of the above-mentioned lower limit values and any one of the above-mentioned upper limit values. A temperature increase rate up to the carbonizing temperature is not particularly limited, and may be, for example, 0.5°C/min or more and 300°C/min or less. The carbonization is preferably performed in an inert atmosphere such as a nitrogen atmosphere.

Although the carbonization may be performed under normal pressure (atmospheric pressure), the carbonization is preferably performed under pressure (under a pressure larger than atmospheric pressure). When the carbonization is performed under pressure, the pressure of an atmosphere in which the carbonization is performed may be, for example, 0.05 MPa or more in terms of gauge pressure, and is preferably 0.15 MPa or more, more preferably 0.20 MPa or more, still more preferably 0.40 MPa or more, and particularly preferably 0.50 MPa or more in terms of gauge pressure. Although the upper limit value of the pressure of the atmosphere in which the carbonization is performed is not particularly limited, the pressure may be, for example, 10 MPa or less in terms of gauge pressure.

The carbon carrier is preferably a carbonized material subjected to graphitization treatment after the carbonization. That is, the carbon carrier is preferably, for example, a carbonized material obtained by subjecting the carbonized material obtained by the carbonization of the raw material containing the organic substance to the graphitization treatment.

The graphitization treatment is performed by heating the carbonized material at the temperature at which its graphitization proceeds. The heating temperature at which the carbonized material is heated in the graphitization treatment is not particularly limited as long as the graphitization in the carbonized material proceeds at the temperature. However, the heating temperature is preferably a temperature higher than the carbonizing temperature for obtaining the carbonized material.

Specifically, the heating temperature in the graphitization treatment may be, for example, 1,300°C or more, and is preferably 1,400°C or more, more preferably 1,500°C or more, still more preferably 1,600°C or more, still more preferably 1,700°C or more, still more preferably 1,750°C or more, and particularly preferably 1,800°C or more.

The heating temperature in the graphitization treatment may be, for example, 3,000°C or less, and is preferably 2,500°C or less, more preferably 2,400°C or less, still more preferably 2,300°C or less, still more preferably 2,250°C or less, still more preferably 2,200°C or less, still more preferably 2,150°C or less, and particularly preferably 2,100°C or less. The heating temperature in the graphitization treatment may be specified by arbitrarily combining any one of the above-mentioned lower limit values and any one of the above-mentioned upper limit values. A temperature increase rate up to the heating temperature in the graphitization treatment is not particularly limited, and may be, for example, 0.5°C/min or more and 300°C/min or less. The graphitization treatment is preferably performed in an inert atmosphere such as a nitrogen atmosphere.

When the carbon carrier is a carbonized material subjected to the graphitization treatment after the carbonization, it is preferred to refrain from subjecting the carbonized material after the graphitization treatment to pulverization treatment. That is, in the production of the carbon carrier, for example, the following is preferably performed: the median diameter of the carbonized material obtained by the carbonization of the raw material is adjusted by subjecting the carbonized material to pulverization treatment; and then, the pulverized carbonized material is subjected to graphitization treatment, and the carbonized material after the graphitization treatment is not subjected to any pulverization treatment.

The carbon carrier is preferably a carbon material exhibiting catalytic activity. That is, in this case, the carbon carrier is a carbon catalyst that itself exhibits the catalytic activity alone. The carbon carrier that is a carbon catalyst is preferably a carbonized material obtained by carbonizing a raw material containing an organic substance and a metal as described above.

The catalytic activity exhibited by the carbon carrier is, for example, preferably reduction activity and/or oxidation activity, more preferably oxygen reduction activity and/or hydrogen oxidation activity, and particularly preferably at least oxygen reduction activity.

In the catalyst of the present invention, the catalyst metal particles supported on the carbon carrier each contain the noble metal alloy. The noble metal alloy is an alloy of a noble metal and a metal other than the noble metal (hereinafter referred to as "non-noble metal"). That is, the noble metal alloy contains one or more noble metals, and one or more non-noble metals. The catalyst metal particles may each further contain a noble metal that does not form any alloy (hereinafter sometimes referred to as "pure noble metal").

The noble metal is, for example, preferably one or more selected from the group consisting of: ruthenium (Ru); palladium (Pd); rhodium (Rh); silver (Ag); osmium (Os); iridium (Ir); platinum (Pt); and gold (Au), more preferably one or more selected from the group consisting of: Ru; Pd; Rh; Ir; and Pt, and particularly preferably Pt.

That is, the catalyst metal particles each preferably contain a platinum alloy. The platinum alloy is an alloy of platinum and a non-noble metal. That is, the platinum alloy contains platinum and one or more non-noble metals. In addition, the platinum alloy may further contain one or more other noble metals, or may be free of any other noble metal. The catalyst metal particles may each further contain platinum that does not form any alloy (hereinafter sometimes referred to as "pure platinum").

The non-noble metal for forming the noble metal alloy is not particularly limited as long as the metal is a metal other than the noble metal that forms an alloy with the noble metal. However, the metal is preferably a transition metal other than the noble metal. Specifically, the non-noble metal in the noble metal alloy is, for example, preferably one or more selected from the group consisting of: titanium (Ti); manganese (Mn); iron (Fe); cobalt (Co); nickel (Ni); copper (Cu); niobium (Nb); and cerium (Ce), more preferably one or more selected from the group consisting of: Fe; Co; and Ni, and particularly preferably one or more selected from the group consisting of: Co; and Ni.

When the carbon carrier is a carbonized material of a raw material containing an organic substance and a raw material metal, the catalyst metal particles supported on the carbon carrier may each contain a metal identical to the raw material metal, or may each be free of a metal identical to the raw material metal.

The catalytic activity of each of the catalyst metal particles is not particularly limited as long as the effects of the present invention are obtained. However, for example, each of the catalyst metal particles preferably exhibits reduction activity and/or oxidation activity, more preferably exhibits oxygen reduction activity and/or hydrogen oxidation activity, and particularly preferably exhibits at least oxygen reduction activity.

The catalyst of the present invention preferably has a carbon structure exhibiting, in a Raman spectrum obtained by Raman spectroscopy, a ratio (hereinafter referred to as "Raman 2D/G ratio") of the intensity of a 2D band having a peak top in the vicinity of a Raman shift of $2,680 \text{ cm}^{-1}$ (specifically, for example, in the range of $2,600 \text{ cm}^{-1}$ or more and $2,800 \text{ cm}^{-1}$ or less) to the intensity of a G band having a peak top in the vicinity of a Raman shift of $1,600 \text{ cm}^{-1}$ (specifically, for example, in the range of $1,550 \text{ cm}^{-1}$ or more and $1,700 \text{ cm}^{-1}$ or less), of 0.20 or more and 1.00 or less.

The Raman 2D/G ratio of the catalyst of the present invention is, for example, more preferably 0.25 or more, still more preferably 0.30 or more, still more preferably 0.35 or more, still more preferably 0.40 or more, still more preferably 0.45 or more, still more preferably 0.50 or more, and particularly preferably 0.55 or more.

The Raman 2D/G ratio of the catalyst of the present invention is, for example, preferably 0.95 or less, more preferably 0.90 or less, still more preferably 0.85 or less, still more preferably 0.80 or less, still more preferably 0.75 or less, still more preferably 0.70 or less, still more preferably 0.65 or less, and particularly preferably 0.60 or less. The Raman 2D/G ratio of the catalyst of the present invention may be specified by arbitrarily combining any one of the above-mentioned lower limit values and any one of the above-mentioned upper limit values.

Herein, the Raman 2D/G ratio of a carbon material represents the number of layers which form a stack of graphene in the carbon structure of the carbon material. That is, when the intensity of the 2D band is higher than the intensity of the G band (Raman 2D/G ratio>1), graphene is formed of a single layer. When the intensity of the 2D band is the same as the intensity of the G band (Raman 2D/G ratio=1), the number of layers in the stack of graphene is about 2. When the intensity of the 2D band is lower than the intensity of the G band (Raman 2D/G ratio<1), the number of layers in the stack of graphene is 3 or more. The number of layers stacked may be specifically determined from a ratio between the intensity of the 2D band (the height of its peak top) and the intensity of the G band (the height of its peak top).

A carbon structure exhibiting an excessively low Raman 2D/G ratio, that is, a carbon structure having an excessively large number of layers in a stack of graphene is inferior in durability because the relative amount of its edge portions, which serve as starting points of oxidative degradation, with respect to its basal planes is too large. In contrast, a carbon structure exhibiting a Raman 2D/G ratio equal to or higher than the above-mentioned lower limit value contributes to an improvement in durability because the carbon structure includes graphene of fewer layers in which the number of layers in a stack of graphene is controlled to an appropriate range (e.g., from about 2 to about 3), and the relative amount of its edge portions with respect to its basal planes exposed is controlled to an appropriate range.

Meanwhile, the edge portions also function as sites for supporting the catalyst metal particles. Accordingly, a carbon structure exhibiting an excessively high Raman 2D/G ratio has inferior aptitude for supporting the catalyst metal particles because the relative amount of its edge portions with respect to its basal planes is too small. In contrast, a carbon structure exhibiting a Raman 2D/G ratio equal to or lower than the above-mentioned upper limit value has excellent aptitude for supporting the catalyst metal particles, and as a result, contributes to an improvement in durability and/or catalytic function of the metal-supported catalyst because the carbon structure includes an appropriate amount of edge portions with respect to basal planes.

The catalyst of the present invention preferably has a carbon structure exhibiting, in the Raman spectrum obtained by Raman spectroscopy, a half width at half maximum (hereinafter referred to as "Raman D half width at half maximum") of a D band having a peak top in the vicinity of a Raman shift of 1,340 $cm^{-1}$ (specifically, for example, in the range of 1,320 $cm^{-1}$ or more and 1,360 $cm^{-1}$ or less) of 41.0 $cm^{-1}$ or less.

The Raman D half width at half maximum of the catalyst of the present invention is, for example, more preferably 40.0 $cm^{-1}$ or less, still more preferably 38.0 $cm^{-1}$ or less, still more preferably 36.0 $cm^{-1}$ or less, still more preferably 34.0 $cm^{-1}$ or less, still more preferably 32.0 $cm^{-1}$ or less, still more preferably 30.0 $cm^{-1}$ or less, still more preferably 28.0 $cm^{-1}$ or less, still more preferably 27.0 $cm^{-1}$ or less, still more preferably 26.5 $cm^{-1}$ or less, and particularly preferably 26.0 $cm^{-1}$ or less.

The Raman D half width at half maximum of the catalyst of the present invention may be, for example, preferably 20.0 $cm^{-1}$ or more, and is preferably 21.0 $cm^{-1}$ or more, more preferably 22.0 $cm^{-1}$ or more, still more preferably 22.5 $cm^{-1}$ or more, still more preferably 23.0 $cm^{-1}$ or more, still more preferably 23.5 $cm^{-1}$ or more, still more preferably 24.0 $cm^{-1}$ or more, and particularly preferably 24.5 $cm^{-1}$ or more. The Raman D half width at half maximum of the catalyst of the present invention may be specified by arbitrarily combining any one of the above-mentioned lower limit values and any one of the above-mentioned upper limit values.

Herein, according to a reference (A. Sadezky et al., Carbon 43 (2005) 1731-1742), in the Raman spectrum of a carbon material, the D band is a component derived from a carbon atom adjacent to a disordered lattice such as an edge portion of a graphene layer. Moreover, the half width at half maximum of the D band represents the crystallinity of carbon around the edge portion. That is, as the crystallinity of carbon around the edge portion in a carbon structure becomes higher, the Raman D half width at half maximum of the carbon structure becomes smaller. Accordingly, a carbon structure exhibiting a Raman D half width at half maximum equal to or smaller than the above-mentioned upper limit value contributes to an improvement in durability because the carbon structure includes carbon having high crystallinity around its edge portion.

Meanwhile, a carbon structure exhibiting an excessively small Raman D half width at half maximum has inferior aptitude for supporting the catalyst metal particles because the crystallinity of carbon around its edge portion is too high. In contrast, a carbon structure exhibiting a Raman D half width at half maximum equal to or larger than the above-mentioned lower limit value has excellent aptitude for supporting the catalyst metal particles, and as a result, contributes to an improvement in durability and/or catalytic function of the metal-supported catalyst because the carbon structure includes carbon having appropriate crystallinity around its edge portion.

The BET specific surface area of the catalyst of the present invention is preferably 350 ($m^2$/g-carbon carrier) or more. Herein, the numerical unit "/g-carbon carrier" represents a value per 1 g of the carbon carrier in the catalyst of the present invention. Meanwhile, the numerical unit "/g" represents a value per 1 g of the catalyst of the present invention.

The BET specific surface area of the catalyst of the present invention is, for example, more preferably 400 ($m^2$/g-carbon carrier) or more, still more preferably 450 ($m^2$/g-carbon carrier) or more, still more preferably 500 ($m^2$/g-carbon carrier) or more, still more preferably 550 ($m^2$/g-carbon carrier) or more, still more preferably 600 ($m^2$/g-carbon carrier) or more, still more preferably 650 ($m^2$/g-carbon carrier) or more, still more preferably 700 ($m^2$/g-carbon carrier) or more, still more preferably 750 ($m^2$/g-carbon carrier) or more, still more preferably 800 ($m^2$/g-carbon carrier) or more, still more preferably 850 ($m^2$/g-carbon carrier) or more, still more preferably 900 ($m^2$/g-carbon carrier) or more, and particularly preferably 950 ($m^2$/g-carbon carrier) or more. The BET specific surface area of the catalyst of the present invention may be, for example, 3,000 ($m^2$/g-carbon carrier) or less, 2,500 ($m^2$/g-carbon carrier) or less, 2,000 ($m^2$/g-carbon carrier) or less, 1,800 ($m^2$/g-carbon carrier) or less, 1,600 ($m^2$/g-carbon carrier) or less, 1,500 ($m^2$/g-carbon carrier) or less, 1,400 ($m^2$/g-carbon carrier) or less, or 1,300 ($m^2$/g-carbon carrier) or less. The BET specific surface area of the catalyst of the present invention may be specified by arbitrarily combining any one of the above-mentioned lower limit values and any one of the above-mentioned upper limit values.

The BET specific surface area ($m^2$/g-carbon carrier) of the catalyst of the present invention is calculated from: the BET specific surface area ($m^2$/g) of the catalyst of the present invention obtained from a nitrogen adsorption isotherm at a temperature of 77 K by a BET method; and the weight ratio of the carbon carrier in the catalyst of the present invention obtained by inductively coupled plasma optical emission spectrometry.

The average pore diameter of the catalyst of the present invention is preferably 8.0 nm or less. For example, the average pore diameter of the catalyst of the present invention is more preferably 7.0 nm or less, still more preferably 6.0 nm or less, still more preferably 5.0 nm or less, still more preferably 4.5 nm or less, still more preferably 4.0 nm or less, still more preferably 3.5 nm or less, and particularly preferably 3.0 nm or less. The average pore diameter of the catalyst of the present invention may be, for example, 1.0 nm or more, is preferably 1.5 nm or more, and particularly preferably 2.0 nm or more. The average pore diameter of the catalyst of the present invention may be specified by arbitrarily combining any one of the above-mentioned lower limit values and any one of the above-mentioned upper limit values. The average pore diameter of the catalyst of the present invention is obtained from a nitrogen adsorption isotherm at a temperature of 77 K by a BJH method.

When the average pore diameter of the metal-supported catalyst is excessively large, in, for example, the case where the metal-supported catalyst is used as an electrode catalyst for a fuel cell, an ionomer is liable to enter each of the pores of the metal-supported catalyst. As a result, the catalyst metal particles supported in the pores are each coated with the ionomer, and hence a reduction in catalytic activity of the catalyst is liable to occur. In contrast, a porous structure having an average pore diameter equal to or less than the above-mentioned upper limit value contributes to an improvement in durability and/or catalytic function of the catalyst, since the ionomer hardly enters each of the pores of the porous structure.

When the average pore diameter of the metal-supported catalyst is excessively small, the catalyst metal particles are more liable to be supported on the outer surface of the carbon carrier than in its pores, and hence the durability of the catalyst reduces. In contrast, a porous structure having an average pore diameter equal to or more than the above-mentioned lower limit value contributes to an improvement in durability of the catalyst, since the catalyst metal particles are effectively supported in the pores of the structure.

In the catalyst of the present invention, the ratio of the weight of the noble metal in the catalyst of the present invention (more specifically, the noble metal in the catalyst metal particles) to the weight of the catalyst of the present invention (hereinafter referred to as "noble metal content") is preferably 35 wt% or more. The noble metal content of the catalyst of the present invention is, for example, more preferably 37 wt% or more, still more preferably 40 wt% or more, still more preferably 42 wt% or more, still more preferably 45 wt% or more, and particularly preferably 47 wt% or more. The noble metal content of the catalyst of the present invention may be, for example, 90 wt% or less, may be 80 wt% or less, may be 70 wt% or less, or may be 60 wt% or less. The noble metal content of the catalyst of the present invention may be specified by arbitrarily combining any one of the above-mentioned lower limit values and any one of the above-mentioned upper limit values. The noble metal content of the catalyst of the present invention is obtained by inductively coupled plasma optical emission spectrometry.

In the catalyst of the present invention, the molar ratio of the noble metal in the catalyst of the present invention to the non-noble metal in the catalyst of the present invention (hereinafter referred to as "noble metal/non-noble metal molar ratio") is preferably 1.0 or more. The noble metal/non-noble metal molar ratio of the catalyst of the present invention is, for example, more preferably 1.5 or more, still more preferably 2.0 or more, still more preferably 2.5 or more, and particularly preferably 3.0 or more.

The noble metal/non-noble metal molar ratio of the catalyst of the present invention may be, for example, 20.0 or less, and is preferably 15.0 or less, more preferably 14.0 or less, still more preferably 13.0 or less, still more preferably 12.0 or less, still more preferably 11.0 or less, and particularly preferably 10.5 or less. The noble metal/non-noble metal molar ratio of the catalyst of the present invention may be specified by arbitrarily combining any one of the above-mentioned lower limit values and any one of the above-mentioned upper limit values. The noble metal/non-noble metal molar ratio of the catalyst of the present invention is calculated from the respective molar fractions of the noble metal and the non-noble metal in the catalyst of the present invention obtained by inductively coupled plasma optical emission spectrometry.

In the catalyst of the present invention, it is preferred that an alloy composition nonuniformity, which is calculated from the following equation (I), is 0.55 or less.

$$\text{alloy composition nonuniformity} = (1 - \text{theoretical lattice constant} / \text{measured lattice constant}) \times 100 \tag{I}$$

In the equation (I), the theoretical lattice constant and the measured lattice constant are respectively a theoretical lattice constant and a measured lattice constant of the noble metal alloy in the catalyst of the present invention. The theoretical lattice constant of the noble metal alloy in the catalyst of the present invention is calculated by using the respective molar fractions of the noble metal and the non-noble metal obtained by the inductively coupled plasma optical emission spectrometry of the catalyst of the present invention. The measured lattice constant of the noble metal alloy in the catalyst of the present invention is calculated by using the position (diffraction angle 2Θ) of the peak top of a diffraction peak corresponding to the (111) plane of the noble metal alloy in an X-ray diffraction pattern obtained by powder X-ray diffraction of the catalyst of the present invention. When the noble metal alloy in the catalyst of the present invention is a platinum alloy, the position of the peak top of the diffraction peak corresponding to the (111) plane of the platinum alloy in the X-ray diffraction pattern of the catalyst of the present invention falls within the range of from 35° to 44° in terms of diffraction angle 2θ.

The alloy composition nonuniformity of the catalyst of the present invention is, for example, more preferably 0.50 or less, still more preferably 0.48 or less, still more preferably 0.45 or less, still more preferably 0.42 or less, still more preferably 0.40 or less, and particularly preferably 0.38 or less. The alloy composition nonuniformity of the catalyst of the present invention may be, for example, 0.01 or more, or may be 0.05 or more. The alloy composition nonuniformity of the catalyst of the present invention may be specified by arbitrarily combining any one of the above-mentioned lower limit values and any one of the above-mentioned upper limit values. An alloy composition nonuniformity equal to or less than the above-mentioned upper limit values indicates high uniformity of the composition of the noble metal alloy in the metal-supported catalyst, and hence contributes to an improvement in durability and/or catalytic function of the catalyst.

In the catalyst of the present invention, it is preferred that a half-maximum asymmetry and a 1/4-maximum asymmetry, which are respectively calculated from the following equation (II) and equation (III), is each 0.55 or less.

$$\text{half-maximum asymmetry} = |(D_m - D_{Lh}) - (D_{Hh} - D_m)| \qquad (II)$$

$$\text{1/4-maximum asymmetry} = |(D_m - D_{Lq}) - (D_{Hq} - D_m)| \qquad (III)$$

In the equation (II) and the equation (III), $D_m$ represents a value of a diffraction angle $2\theta$ at which a diffraction line exhibits the maximum intensity in the range of the diffraction angle $2\theta$ in which the diffraction peak of the (111) plane of the noble metal alloy appears in an X-ray diffraction pattern obtained by the powder X-ray diffraction of the catalyst of the present invention (e.g., when the noble metal alloy is a platinum alloy, the range of from 35° to 44° in terms of diffraction angle $2\theta$ in which the diffraction peak of the (111) plane of the platinum alloy appears), $D_{Lh}$ represents a value of the smallest diffraction angle $2\theta$ among diffraction angles $2\theta$ at which the diffraction line exhibits an intensity equal to one half of the maximum intensity in the range, $D_{Hh}$ represents a value of the largest diffraction angle $2\theta$ among the diffraction angles $2\theta$ at which the diffraction line exhibits the intensity equal to one half of the maximum intensity in the range, $D_{Lq}$ represents a value of the smallest diffraction angle $2\theta$ among diffraction angles $2\theta$ at which the diffraction line exhibits an intensity equal to one quarter of the maximum intensity in the range, and $D_{Hq}$ represents a value of the largest diffraction angle $2\theta$ among the diffraction angles $2\theta$ at which the diffraction line exhibits the intensity equal to one quarter of the maximum intensity in the range.

Each of the half-maximum asymmetry and 1/4-maximum asymmetry of the catalyst of the present invention is, for example, more preferably 0.53 or less, still more preferably 0.50 or less, still more preferably 0.48 or less, still more preferably 0.45 or less, and particularly preferably 0.43 or less. Each of the half-maximum asymmetry and 1/4-maximum asymmetry of the catalyst of the present invention may be, for example, 0.01 or more, or may be 0.05 or more. Each of the half-maximum asymmetry and 1/4-maximum asymmetry of the catalyst of the present invention may be specified by arbitrarily combining any one of the above-mentioned lower limit values and any one of the above-mentioned upper limit values. A half-maximum asymmetry and a 1/4-maximum asymmetry equal to or less than the above-mentioned upper limit values indicate high uniformity of the composition of the noble metal alloy in the metal-supported catalyst, and hence contribute to an improvement in durability and/or catalytic function of the catalyst.

The catalyst metal particles in the catalyst of the present invention preferably have a number-average particle diameter of 8.0 nm or less. The number-average particle diameter of the catalyst metal particles is, for example, preferably 7.5 nm or less, more preferably 7.0 nm or less, still more preferably 6.5 nm or less, still more preferably 6.0 nm or less, still more preferably 5.5 nm or less, still more preferably 5.0 nm or less, still more preferably 4.5 nm or less, still more preferably 4.0 nm or less, and particularly preferably 3.5 nm or less. The number-average particle diameter of the catalyst metal particles may be, for example, 1.0 nm or more, may be 1.5 nm or more, or may be 2.0 nm or more. The number-average particle diameter of the catalyst metal particles in the catalyst of the present invention may be specified by arbitrarily combining any one of the above-mentioned lower limit values and any one of the above-mentioned upper limit values. The number-average particle diameter of the catalyst metal particles in the catalyst of the present invention is obtained by powder X-ray diffraction of the catalyst of the present invention. The catalyst metal particles having a number-average particle diameter equal to or less than the above-mentioned upper limit values contribute to an improvement in durability and/or catalytic function of the catalyst. When the number-average particle diameter of the catalyst metal particles is excessively large, the metal surface area of the catalyst metal particles per unit metal mass is so small that the output characteristic of the catalyst may deteriorate. In contrast, a number-average particle diameter equal to or less than the above-mentioned upper limit values increases the metal surface area of the catalyst metal particles per unit metal mass to contribute to an improvement in output characteristic.

The catalyst metal particles in the catalyst of the present invention preferably have a volume-average particle diameter of 8.0 nm or less. The volume-average particle diameter of the catalyst metal particles is, for example, preferably 7.5 nm or less, more preferably 7.0 nm or less, still more preferably 6.5 nm or less, still more preferably 6.0 nm or less, still more preferably 5.5 nm or less, still more preferably 5.0 nm or less, still more preferably 4.5 nm or less, and particularly preferably 4.2 nm or less. The volume-average particle diameter of the catalyst metal particles may be, for example, 1.0 nm or more, may be 1.5 nm or more, or may be 2.0 nm or more. The volume-average particle diameter of the catalyst metal particles in the catalyst of the present invention may be specified by arbitrarily combining any one of the above-mentioned lower limit values and any one of the above-mentioned upper limit values. The volume-average particle diameter of the catalyst metal particles in the catalyst of the present invention is obtained by powder X-ray diffraction of the catalyst of the present invention. When the volume-average particle diameter of the catalyst metal particles is excessively large, the metal surface area of the catalyst metal particles per unit metal mass is so small that the output characteristic may deteriorate, and a metal for forming the surfaces of the catalyst metal particles is liable to be dissolved as a metal ion owing to a large variation in particle diameter. In contrast, a volume-average particle diameter equal to or less than the above-mentioned upper limit values increases the metal surface area of the catalyst metal particles per unit metal mass to contribute to an improvement in output characteristic, and suppresses the dissolution of the catalyst metal particles to contribute to an improvement in durability and/or catalytic function of the catalyst.

In the catalyst of the present invention, it is preferred that the noble metal in the catalyst of the present invention has a dependence on a sweep rate of an electrochemical effective specific surface area (ECSA) (hereinafter referred to as "ECSA-sweep rate dependence") of 60% or more, which is calculated from the following equation (IV).

$$\text{ECSA-sweep rate dependence (\%)} = (1 - \text{ECSA at 1,000 mV}/\text{ECSA at 10 mV}) \times 100 \qquad \text{(IV)}$$

The numerical unit "/g-noble metal" represents a value per 1 g of the noble metal in the catalyst of the present invention. That is, for example, the numerical unit "/g-Pt" represents a value per 1 g of platinum in the catalyst of the present invention.

In the equation (IV), the "ECSA at 1,000 mV" and the "ECSA at 10 mV" represent ECSAs ($m^2$/g-noble metal) per 1 g of the noble metal in the catalyst of the present invention (i.e., an "ECSA at 1,000 mV ($m^2$/g-noble metal)" and an "ECSA at 10 mV ($m^2$/g-noble metal)"), which are respectively obtained by cyclic voltammetry in which a potential is swept at a sweep rate of 1,000 mV/sec and cyclic voltammetry in which the potential is swept at a sweep rate of 10 mV/sec, using a rotating ring-disk electrode apparatus having a working electrode carrying the catalyst of the present invention.

The ECSA-sweep rate dependence of the catalyst of the present invention is, for example, more preferably 65% or more, still more preferably 70% or more, still more preferably 75% or more, and particularly preferably 80% or more. The ECSA-sweep rate dependence of the catalyst of the present invention may be, for example, 100% or less, may be 95% or less, or may be 90% or less. The ECSA-sweep rate dependence of the catalyst of the present invention may be specified by arbitrarily combining any one of the above-mentioned lower limit values and any one of the above-mentioned upper limit values.

For example, when the catalyst metal particles supported on the carbon carrier in the catalyst of the present invention each contain platinum as a noble metal, the dependence (%) of the ECSA of platinum in the catalyst of the present invention on a sweep rate is calculated, as the "ECSA at 1,000 mV" and the "ECSA at 10 mV" in the equation (IV), by using ECSAs ($m^2$/g-Pt) per 1 g of platinum in the catalyst of the present invention (i.e., an "ECSA at 1,000 mV ($m^2$/g-Pt)" and an "ECSA at 10 mV ($m^2$/g-Pt)"), which are respectively obtained by cyclic voltammetry in which a potential is swept at a sweep rate of 1,000 mV/sec and cyclic voltammetry in which the potential is swept therewith at a sweep rate of 10 mV/sec, using a rotating ring-disk electrode apparatus including a working electrode carrying the catalyst of the present invention.

The catalyst metal particles supported in the pores of the carbon carrier contribute to the catalytic activity and/or durability of the metal-supported catalyst because the particles hardly aggregate compared to the catalyst metal particles supported on the outer surface of the carbon carrier. In this respect, when many of the catalyst metal particles are supported on the outer surface of the carbon carrier in the metal-supported catalyst, the amount by which the ECSA reduces along with an increase in sweep rate of the potential in the above-mentioned cyclic voltammetry is small. Meanwhile, when the ratio of the catalyst metal particles supported in the pores of the carbon carrier in the metal-supported catalyst is large, the amount by which the ECSA reduces along with an increase in sweep rate of the potential in the above-mentioned cyclic voltammetry is large. Accordingly, the magnitude of the ECSA-sweep rate dependence of the metal-supported catalyst reflects the magnitude of the relative amount of the catalyst metal particles supported in the pores of the carbon carrier with respect to the catalyst metal particles supported on the outer surface of the carbon carrier of the metal-supported catalyst.

A method of producing a metal-supported catalyst according to an embodiment of the present invention (hereinafter referred to as "method of the present invention") is a method of producing a metal-supported catalyst including a carbon carrier and catalyst metal particles supported on the carbon carrier, the particles each containing a noble metal alloy, and the method preferably includes: a first impregnation step of impregnating the carbon carrier with a precursor of one of a noble metal or a non-noble metal for forming the noble metal alloy (hereinafter referred to as "first metal"); a first gas-phase reduction step of subjecting the carbon carrier impregnated with the precursor of the first metal to gas-phase reduction treatment to provide a first metal-supported catalyst supporting the first metal; a second impregnation step of impregnating the first metal-supported catalyst with a precursor of the other of the noble metal or the non-noble metal (hereinafter referred to as "second metal"); and a second gas-phase reduction step of subjecting the first metal-supported catalyst impregnated with the precursor of the second metal to gas-phase reduction treatment, and then to alloying treatment to provide the metal-supported catalyst having supported thereon the catalyst metal particles each containing an alloy of the first metal and the second metal.

In the first impregnation step, the carbon carrier that has not yet been impregnated with a precursor of each of the noble metal and the non-noble metal that should form the noble metal alloy in each of the catalyst metal particles is impregnated with the precursor of the first metal. The first metal may be any one of the noble metal and the non-noble metal that should form the noble metal alloy in each of the catalyst metal particles. However, when the non-noble metal having the larger ionization tendency is selected as the first metal, the non-noble metal serving as the first metal is ionized at the time of the impregnation with the noble metal serving as the second metal in the second impregnation step. Accordingly, the first metal is preferably the noble metal having the smaller ionization tendency.

In the method of the present invention, when a noble metal alloy containing two or more noble metals and/or two or more non-noble metals is formed, in the first impregnation step, the carbon carrier may be impregnated with, as the precursor of the first metal, a precursor of only one noble metal or a precursor of only one non-noble metal, or the carbon carrier may be impregnated with precursors of two or more noble metals or precursors of two or more non-noble metals. When the carbon carrier is impregnated with precursors of the two or more first metals, for example, the first impregnation step may include first impregnating the carbon carrier with a precursor of one first metal, of the two or more first metals, followed by the impregnation of the carbon carrier with a precursor of another first metal, or may include simultaneously impregnating the carbon carrier with the precursors of the two or more first metals.

A method of impregnating the carbon carrier with the precursor of the first metal is not particularly limited as long as the effects of the present invention are obtained. However, the carbon carrier is preferably immersed in, for example, a solution containing the precursor of the first metal. Herein, when the carbon carrier is impregnated with precursors of the two or more first metals, for example, the first impregnation step may include first immersing the carbon carrier in a solution containing a precursor of one first metal, of the two or more first metals, followed by the immersing of the carbon carrier in a solution containing a precursor of another first metal, or may include immersing the carbon carrier in a solution containing the precursors of the two or more first metals.

The pressure (air pressure) of an atmosphere in which the first impregnation step is performed is not particularly limited as long as the effects of the present invention are obtained, and the pressure may be normal pressure (atmospheric pressure). However, for example, the first impregnation step preferably includes keeping a solution containing the precursor of the first metal and the carbon carrier under reduced pressure. When the solution containing the precursor of the first metal and the carbon carrier is kept under reduced pressure, the inside of each of the pores of the carbon carrier is effectively deaerated, and hence the inside of each of the pores is effectively impregnated with the precursor.

The pressure of a pressure-reduced atmosphere in which the solution containing the precursor of the first metal and the carbon carrier is kept is not particularly limited as long as the effects of the present invention are obtained. However, the pressure may be, for example, -0.02 MPa or less in terms of gauge pressure, and is preferably -0.04 MPa or less, more preferably -0.06 MPa or less, still more preferably -0.08 MPa or less, and particularly preferably -0.10 MPa or less. The pressure of the pressure-reduced atmosphere in which the solution containing the precursor of the first metal and the carbon carrier is kept may be, for example, -0.1013 MPa or more in terms of gauge pressure. The pressure of the pressure-reduced atmosphere in which the solution containing the precursor of the first metal and the carbon carrier is kept may be specified by arbitrarily combining the above-mentioned lower limit value and any one of the above-mentioned upper limit values.

In the first impregnation step, the time period for which the solution containing the precursor of the first metal and the carbon carrier is kept under reduced pressure is not particularly limited as long as the effects of the present invention are obtained. However, the time period may be, for example, 10 minutes or more, and is preferably 20 minutes or more, more preferably 30 minutes or more, still more preferably 40 minutes or more, still more preferably 50 minutes or more, and particularly preferably 55 minutes or more. The time period for which the solution containing the precursor of the first metal and the carbon carrier is kept under reduced pressure may be, for example, 24 hours or less, may be 5 hours or less, or may be 3 hours or less. The time period for which the solution containing the precursor of the first metal and the carbon carrier is kept under reduced pressure may be specified by arbitrarily combining any one of the above-mentioned lower limit values and any one of the above-mentioned upper limit values.

The first impregnation step preferably includes keeping the solution containing the precursor of the first metal and the carbon carrier under pressure. When the solution containing the precursor of the first metal and the carbon carrier is kept under pressure, the inside of each of the pores of the carbon carrier is effectively impregnated with the precursor.

The pressure of a pressurized atmosphere in which the solution containing the precursor of the first metal and the carbon carrier is kept is not particularly limited as long as the effects of the present invention are obtained. However, the pressure may be, for example, 0.03 MPa or more in terms of gauge pressure, and is preferably 0.06 MPa or more, more preferably 0.09 MPa or more, still more preferably 0.12 MPa or more, and particularly preferably 0.15 MPa or more. The pressure of the pressurized atmosphere in which the solution containing the precursor of the first metal and the carbon carrier is kept may be, for example, 10 MPa or less in terms of gauge pressure, or may be 5 MPa or less. The pressure of the pressurized atmosphere in which the solution containing the precursor of the first metal and the carbon carrier is kept may be specified by arbitrarily combining any one of the above-mentioned lower limit values and any one of the above-mentioned upper limit values.

In the first impregnation step, the time period for which the solution containing the precursor of the first metal and the carbon carrier is kept under pressure is not particularly limited as long as the effects of the present invention are obtained. However, the time period may be, for example, 10 minutes or more, and is preferably 20 minutes or more, more preferably 30 minutes or more, still more preferably 40 minutes or more, still more preferably 50 minutes or more, and particularly preferably 55 minutes or more. The time period for which the solution containing the precursor of the first metal and the carbon carrier is kept under pressure may be, for example, 24 hours or less, may be 5 hours or less, or may be 3 hours or less. The time period for which the solution containing the precursor of the first metal and the carbon carrier is kept under pressure may be specified by arbitrarily combining any one of the above-mentioned lower limit values and any one of the above-mentioned upper limit values.

The first impregnation step preferably includes keeping the solution containing the precursor of the first metal and the carbon carrier first under reduced pressure, and then under pressure. In this case, the inside of each of the pores of the carbon carrier is extremely effectively impregnated with the precursor of the first metal.

The first impregnation step preferably includes mixing by stirring the solution containing the precursor of the first metal and the carbon carrier before keeping the solution containing the precursor of the first metal and the carbon carrier under reduced pressure, and/or before keeping the solution containing the precursor of the first metal and the carbon carrier under pressure. When the precursor of the first metal and the carbon carrier are mixed by stirring the solution containing the precursor of the first metal and the carbon carrier before keeping under reduced pressure and/or before keeping under pressure, the inside of each of the pores of the carbon carrier is effectively impregnated with the precursor.

The first impregnation step preferably includes mixing by stirring the solution containing the precursor of the first metal and the carbon carrier after keeping the solution containing the precursor of the first metal and the carbon carrier under reduced pressure, and/or after keeping the solution containing the precursor of the first metal and the carbon carrier under pressure. When the precursor of the first metal and the carbon carrier are mixed by stirring the solution containing the precursor of the first metal and the carbon carrier after keeping under reduced pressure and/or after keeping under pressure, the inside of each of the pores of the carbon carrier is effectively impregnated with the precursor.

The time period for mixing by stirring the solution containing the precursor of the first metal and the carbon carrier is not particularly limited as long as the effects of the present invention are obtained. However, the time period may be, for example, 0.1 hour or more, and is preferably 0.5 hour or more, more preferably 1 hour or more, still more preferably 5 hours or more, still more preferably 10 hours or more, still more preferably 18 hours or more, still more preferably 24 hours or more, still more preferably 35 hours or more, still more preferably 50 hours or more, and particularly preferably 65 hours or more. The stirring and mixing time may be 120 hours or less, may be, for example, 96 hours or less, or may be 72 hours or less. The time period for mixing by stirring the solution containing the precursor of the first metal may be specified by arbitrarily combining any one of the above-mentioned lower limit values and any one of the above-mentioned upper limit values.

The temperature (air temperature) of the atmosphere in which the first impregnation step is performed is not particularly limited as long as the effects of the present invention are obtained, and the temperature may be normal temperature (e.g., about 25°C). However, the first impregnation step preferably includes, for example, keeping the solution containing the precursor of the first metal and the carbon carrier at low temperature. When the solution containing the precursor of the first metal and the carbon carrier is kept at low temperature, equilibrium movement accelerates the adsorption of the precursor and/or accelerates the dissolution of a gas molecule, and hence the inside of each of the pores of the carbon carrier is effectively impregnated with the precursor.

That is, the first impregnation step preferably includes keeping the solution containing the precursor of the first metal and the carbon carrier under reduced pressure and at low temperature. The first impregnation step preferably includes keeping the solution containing the precursor of the first metal and the carbon carrier under pressure and at low temperature. The first impregnation step preferably includes mixing by stirring the solution containing the precursor of the first metal and the carbon carrier at low temperature before keeping the solution containing the precursor of the first metal and the carbon carrier under reduced pressure, and/or before keeping the solution containing the precursor of the first metal and the carbon carrier under pressure. The first impregnation step preferably includes mixing by stirring the solution containing the precursor of the first metal and the carbon carrier at low temperature after keeping the solution containing the precursor of the first metal and the carbon carrier under reduced pressure, and/or after keeping the solution containing the precursor of the first metal and the carbon carrier under pressure.

In the first impregnation step, the low temperature at which the solution containing the precursor of the first metal and the carbon carrier is kept is not particularly limited as long as the effects of the present invention are obtained. However, for example, the temperature is preferably 20°C or less, more preferably 15°C or less, still more preferably 10°C or less,

EP 4 487 951 A1

and particularly preferably 5°C or less. The low temperature at which the solution containing the precursor of the first metal and the carbon carrier is kept may be, for example, more than 0°C, or may be 1°C or more. The low temperature at which the solution containing the precursor of the first metal and the carbon carrier is kept may be specified by arbitrarily combining any one of the above-mentioned lower limit values and any one of the above-mentioned upper limit values.

In the first gas-phase reduction step, the carbon carrier impregnated with the precursor of the first metal in the first impregnation step is subjected to the gas-phase reduction treatment (hereinafter referred to as "first gas-phase reduction treatment") to provide the first metal-supported catalyst including the carbon carrier and the first metal supported on the carbon carrier.

In the first gas-phase reduction step, it is preferred to subject a solid, which is obtained by drying a solution containing the carbon carrier impregnated with the precursor of the first metal, to the first gas-phase reduction treatment. In this case, the temperature at which the solution containing the carbon carrier impregnated with the precursor of the first metal is dried is not particularly limited as long as the effects of the present invention are obtained. However, the temperature may be, for example, 40°C or more, and is preferably 60°C or more, more preferably 80°C or more, and particularly preferably 100°C or more. The drying temperature may be, for example, 200°C or less, and is preferably 190°C or less, more preferably 180°C or less, still more preferably 170°C or less, and particularly preferably 160°C or less. The temperature at which the solution containing the carbon carrier impregnated with the precursor of the first metal is dried may be specified by arbitrarily combining any one of the above-mentioned lower limit values and any one of the above-mentioned upper limit values. When the temperature at which the solution containing the carbon carrier impregnated with the precursor of the first metal is dried is excessively low, sufficient removal of the solvent requires a long time, with the result that the precursor of the first metal adsorbing to the carbon carrier may desorb. When the temperature at which the solution containing the carbon carrier impregnated with the precursor of the first metal is dried is excessively high, uniform support of the first metal on the carbon carrier may be inhibited by the oxidation of the carbon carrier and/or the bumping of the solution. Accordingly, a temperature in the above-mentioned ranges is preferably adopted as the temperature at which the solution containing the carbon carrier impregnated with the precursor of the first metal is dried.

The first gas-phase reduction treatment is performed by heating the carbon carrier impregnated with the precursor of the first metal in a reducing atmosphere. The reducing atmosphere in which the first gas-phase reduction treatment is performed is not particularly limited as long as the effects of the present invention are obtained. However, the atmosphere is preferably, for example, an atmosphere containing one or more reducing gases selected from the group consisting of: a hydrogen gas; an ammonia gas; and a carbon monoxide gas.

The concentration of the reducing gas in the reducing atmosphere is not particularly limited as long as the effects of the present invention are obtained. However, the concentration is, for example, preferably 50 vol% or more, more preferably 60 vol% or more, still more preferably 70 vol% or more, still more preferably 80 vol% or more, still more preferably 90 vol% or more, still more preferably 95 vol% or more, and particularly preferably 100 vol%.

The temperature at which the carbon carrier impregnated with the precursor of the first metal is heated in the first gas-phase reduction treatment (hereinafter referred to as "first reduction heating temperature") is not particularly limited as long as the effects of the present invention are obtained. However, the first reduction heating temperature is, for example, preferably 100°C or more, more preferably 150°C or more, still more preferably 200°C or more, still more preferably 250°C or more, and particularly preferably 300°C or more. The first reduction heating temperature may be, for example, 550°C or less, and is preferably 500°C or less, more preferably 450°C or less, and particularly preferably 400°C or less. The first reduction heating temperature may be specified by arbitrarily combining any one of the above-mentioned lower limit values and any one of the above-mentioned upper limit values. When a temperature in the above-mentioned ranges is adopted as the first reduction heating temperature, the precursor of the first metal can be efficiently reduced while excessive aggregation of the particles of the first metal is prevented.

The time period for which the heating is performed at the first reduction heating temperature in the first gas-phase reduction treatment (hereinafter referred to as "first reduction heating time") is not particularly limited as long as the effects of the present invention are obtained. However, the first reduction heating time is, for example, preferably 10 minutes or more, more preferably 30 minutes or more, still more preferably 60 minutes or more, still more preferably 90 minutes or more, and particularly preferably 100 minutes or more. The first reduction heating time may be, for example, 24 hours or less, and is preferably 12 hours or less, more preferably 6 hours or less, and particularly preferably 3 hours or less. The first reduction heating time may be specified by arbitrarily combining any one of the above-mentioned lower limit values and any one of the above-mentioned upper limit values. When a time period in the above-mentioned ranges is adopted as the first reduction heating time, excessive aggregation of the particles of the first metal can be effectively prevented while the reduction of the precursor of the first metal is caused to sufficiently proceed.

In the second impregnation step, the first metal-supported catalyst obtained in the first gas-phase reduction step is impregnated with the precursor of the second metal. When the first metal is a noble metal, the second metal is a non-noble metal, and when the first metal is a non-noble metal, the second metal is a noble metal.

When the carbon carrier is impregnated with the precursor of the noble metal in the above-mentioned first impregnation step, the second impregnation step is preferably a step of impregnating the carbon carrier with the precursor of the non-noble metal for the first time after the first impregnation step. When the carbon carrier is impregnated with the precursor of the non-noble metal in the above-mentioned first impregnation step, the second impregnation step is preferably a step of impregnating the carbon carrier with the precursor of the noble metal for the first time after the first impregnation step.

In the method of the present invention, when a noble metal alloy containing two or more noble metals and/or two or more non-noble metals is formed, in the second impregnation step, the first metal-supported catalyst may be impregnated with, as the precursor of the second metal, a precursor of only one noble metal or a precursor of only one non-noble metal or the first metal-supported catalyst may be impregnated with precursors of two or more noble metals or precursors of two or more non-noble metals. When the first metal-supported catalyst is impregnated with precursors of the two or more second metals, for example, the second impregnation step may include first impregnating the first metal-supported catalyst with a precursor of the one second metal of the two or more second metals, followed by the impregnation of the first metal-supported catalyst with a precursor of another of the second metals, or may include simultaneously impregnating the first metal-supported catalyst with the precursors of the two or more second metals.

A method of impregnating the first metal-supported catalyst with the precursor of the second metal is not particularly limited as long as the effects of the present invention are obtained. However, the first metal-supported catalyst is preferably immersed in, for example, a solution containing the precursor of the second metal. Herein, when the first metal-supported catalyst is impregnated with precursors of the two or more second metals, for example, the second impregnation step may include first immersing the first metal-supported catalyst in a solution containing a precursor of one second metal of the two or more second metals, followed by immersing the first metal-supported catalyst in a solution containing a precursor of another second metal, or may include immersing the first metal-supported catalyst in a solution containing the precursors of the two or more second metals.

The pressure (air pressure) of an atmosphere in which the second impregnation step is performed is not particularly limited as long as the effects of the present invention are obtained, and the pressure may be normal pressure (atmospheric pressure). However, the second impregnation step preferably includes, for example, keeping a solution containing the precursor of the second metal and the first metal-supported catalyst under reduced pressure. When the solution containing the precursor of the second metal and the first metal-supported catalyst is kept under reduced pressure, the inside of each of the pores of the first metal-supported catalyst is effectively deaerated, and hence the inside of each of the pores is effectively impregnated with the precursor.

The pressure of a pressure-reduced atmosphere in which the solution containing the precursor of the second metal and the first metal-supported catalyst is kept is not particularly limited as long as the effects of the present invention are obtained. However, the pressure may be, for example, -0.02 MPa or less in terms of gauge pressure, and is preferably -0.04 MPa or less, more preferably -0.06 MPa or less, still more preferably -0.08 MPa or less, and particularly preferably -0.10 MPa or less. The pressure of the pressure-reduced atmosphere in which the solution containing the precursor of the second metal and the first metal-supported catalyst is kept may be, for example, - 0.1013 MPa or more in terms of gauge pressure. The pressure of the pressure-reduced atmosphere in which the solution containing the precursor of the second metal and the first metal-supported catalyst is kept may be specified by arbitrarily combining the above-mentioned lower limit value and any one of the above-mentioned upper limit values.

In the second impregnation step, the time period for which the solution containing the precursor of the second metal and the first metal-supported catalyst is kept under reduced pressure is not particularly limited as long as the effects of the present invention are obtained. However, the time period may be, for example, 10 minutes or more, and is preferably 20 minutes or more, more preferably 30 minutes or more, still more preferably 40 minutes or more, still more preferably 50 minutes or more, and particularly preferably 55 minutes or more. The time period for which the solution containing the precursor of the second metal and the first metal-supported catalyst is kept under reduced pressure may be, for example, 24 hours or less, may be 5 hours or less, or may be 3 hours or less. The time period for which the solution containing the precursor of the second metal and the first metal-supported catalyst is kept under reduced pressure may be specified by arbitrarily combining any one of the above-mentioned lower limit values and any one of the above-mentioned upper limit values.

The second impregnation step preferably includes keeping the solution containing the precursor of the second metal and the first metal-supported catalyst under pressure. When the solution containing the precursor of the second metal and the first metal-supported catalyst is kept under pressure, the inside of each of the pores of the carbon carrier is effectively impregnated with the precursor.

The pressure of a pressurized atmosphere in which the solution containing the precursor of the second metal and the first metal-supported catalyst is kept is not particularly limited as long as the effects of the present invention are obtained. However, the pressure may be, for example, 0.03 MPa or more in terms of gauge pressure, and is preferably 0.06 MPa or more, more preferably 0.09 MPa or more, still more preferably 0.12 MPa or more, and particularly preferably 0.15 MPa or more. The pressure of the pressurized atmosphere in which the solution containing the precursor of the second metal and the first metal-supported catalyst is kept may be, for example, 10 MPa or less in terms of gauge pressure, or may be 5 MPa or less. The pressure of the pressurized atmosphere in which the solution containing the precursor of the second metal and the first metal-supported catalyst is kept may be specified by arbitrarily combining any one of the above-mentioned lower limit values and any one of the above-mentioned upper limit values.

In the second impregnation step, the time period for which the solution containing the precursor of the second metal and the first metal-supported catalyst is kept under pressure is not particularly limited as long as the effects of the present invention are obtained. However, the time period may be, for example, 10 minutes or more, and is preferably 20 minutes or more, more preferably 30 minutes or more, still more preferably 40 minutes or more, still more preferably 50 minutes or more, and particularly preferably 55 minutes or more. The time period for which the solution containing the precursor of the second metal and the first metal-supported catalyst is kept under pressure may be, for example, 24 hours or less, may be 5 hours or less, or may be 3 hours or less. The time period for which the solution containing the precursor of the second metal and the first metal-supported catalyst is kept under pressure may be specified by arbitrarily combining any one of the above-mentioned lower limit values and any one of the above-mentioned upper limit values.

The second impregnation step preferably includes keeping the solution containing the precursor of the second metal and the first metal-supported catalyst first under reduced pressure, and then under pressure. In this case, the inside of each of the pores of the first metal-supported catalyst is extremely effectively impregnated with the precursor of the second metal.

The second impregnation step preferably includes mixing by stirring the solution containing the precursor of the second metal and the first metal-supported catalyst before keeping the solution containing the precursor of the second metal and the first metal-supported catalyst under reduced pressure, and/or before keeping the solution containing the precursor of the second metal and the first metal-supported catalyst under pressure. When the precursor of the second metal and the first metal-supported catalyst are mixed by stirring the solution containing the precursor of the second metal and the first metal-supported catalyst before keeping under reduced pressure and/or before keeping under pressure, the inside of each of the pores of the first metal-supported catalyst is effectively impregnated with the precursor.

In addition, the second impregnation step preferably includes mixing by stirring the solution containing the precursor of the second metal and the first metal-supported catalyst after keeping the solution containing the precursor of the second metal and the first metal-supported catalyst under reduced pressure, and/or after keeping the solution containing the precursor of the second metal and the first metal-supported catalyst under pressure. When the precursor of the second metal and the first metal-supported catalyst are mixed by stirring the solution containing the precursor of the second metal and the first metal-supported catalyst after keeping under reduced pressure and/or after keeping under pressure, the inside of each of the pores of the first metal-supported catalyst is effectively impregnated with the precursor.

The time period for mixing by stirring the solution containing the precursor of the second metal and the first metal-supported catalyst is not particularly limited as long as the effects of the present invention are obtained. However, the time period may be, for example, 0.1 hour or more, and is preferably 0.5 hour or more, more preferably 1 hour or more, still more preferably 5 hours or more, still more preferably 10 hours or more, still more preferably 18 hours or more, still more preferably 24 hours or more, still more preferably 35 hours or more, still more preferably 50 hours or more, and particularly preferably 65 hours or more. The stirring and mixing time may be, for example, 120 hours or less, may be 96 hours or less, or may be 72 hours or less. The time period for mixing by stirring the solution containing the precursor of the second metal and the first metal-supported catalyst are mixed while being stirred may be specified by arbitrarily combining any one of the above-mentioned lower limit values and any one of the above-mentioned upper limit values.

The temperature (air temperature) of the atmosphere in which the second impregnation step is performed is not particularly limited as long as the effects of the present invention are obtained, and the temperature may be normal temperature (e.g., about 25°C). However, the second impregnation step preferably includes, for example, keeping the solution containing the precursor of the second metal and the first metal-supported catalyst at low temperature. When the solution containing the precursor of the second metal and the first metal-supported catalyst is kept at low temperature, equilibrium movement accelerates the adsorption of the precursor and/or accelerates the dissolution of a gas molecule, and hence the inside of each of the pores of the first metal-supported catalyst is effectively impregnated with the precursor.

That is, the second impregnation step preferably includes keeping the solution containing the precursor of the second metal and the first metal-supported catalyst under reduced pressure and at low temperature. The second impregnation step preferably includes keeping the solution containing the precursor of the second metal and the first metal-supported catalyst under pressure and at low temperature. The second impregnation step preferably includes mixing by stirring the solution containing the precursor of the second metal and the first metal-supported catalyst at low temperature before keeping the solution containing the precursor of the second metal and the first metal-supported catalyst under reduced pressure, and/or before keeping the solution containing the precursor of the second metal and the first metal-supported catalyst under pressure. The second impregnation step preferably includes mixing by stirring the solution containing the precursor of the second metal and the first metal-supported catalyst at low temperature after keeping the solution containing the precursor of the second metal and the first metal-supported catalyst under reduced pressure, and/or after keeping the solution containing the precursor of the second metal and the first metal-supported catalyst under pressure.

In the second impregnation step, the low temperature at which the solution containing the precursor of the second metal and the first metal-supported catalyst is kept is not particularly limited as long as the effects of the present invention are obtained. However, for example, the temperature is preferably 20°C or less, more preferably 15°C or less, still more preferably 10°C or less, and particularly preferably 5°C or less. The low temperature at which the solution containing the precursor of the second metal and the first metal-supported catalyst is kept may be, for example, more than 0°C, or may be 1°C or more. The low temperature at which the solution containing the precursor of the second metal and the first metal-supported catalyst is kept may be specified by arbitrarily combining any one of the above-mentioned lower limit values and any one of the above-mentioned upper limit values.

In the second gas-phase reduction step, the first metal-supported catalyst impregnated with the precursor of the second metal in the second impregnation step is subjected to the gas-phase reduction treatment (hereinafter referred to as "second gas-phase reduction treatment"), and then to the alloying treatment to provide the metal-supported catalyst having supported thereon the catalyst metal particles each containing the alloy of the first metal and the second metal (i.e., the noble metal alloy that is an alloy of the noble metal and the non-noble metal).

In the second gas-phase reduction step, it is preferred to subject a solid, which is obtained by drying a solution containing the first metal-supported catalyst impregnated with the precursor of the second metal, to the second gas-phase reduction treatment. In this case, the temperature at which the solution containing the first metal-supported catalyst impregnated with the precursor of the second metal is dried is not particularly limited as long as the effects of the present invention are obtained. However, the temperature may be, for example, 40°C or more, and is preferably 60°C or more, more preferably 80°C or more, and particularly preferably 100°C or more. The temperature at which the solution containing the first metal-supported catalyst impregnated with the precursor of the second metal is dried may be, for example, 200°C or less, and is preferably 180°C or less, more preferably 160°C or less, still more preferably 140°C or less, and particularly preferably 110°C or less. The temperature at which the solution containing the first metal-supported catalyst impregnated with the precursor of the second metal is dried may be specified by arbitrarily combining any one of the above-mentioned lower limit values and any one of the above-mentioned upper limit values. When the temperature at which the solution containing the first metal-supported catalyst impregnated with the precursor of the second metal is dried is excessively low, sufficient removal of the solvent requires a long time, with the result that the precursor of the second metal adsorbing to the first metal-supported catalyst may desorb. When the temperature at which the solution containing the first metal-supported catalyst impregnated with the precursor of the second metal is dried is excessively high, uniform support of the second metal on the carbon carrier may be inhibited by, for example, the oxidation of the carbon carrier and/or the bumping of the solution. Accordingly, a temperature in the above-mentioned ranges is preferably adopted as the temperature at which the solution containing the first metal-supported catalyst impregnated with the precursor of the second metal is dried.

The second gas-phase reduction treatment is performed by heating the first metal-supported catalyst impregnated with the precursor of the second metal in a reducing atmosphere. The reducing atmosphere in which the second gas-phase reduction treatment is performed is not particularly limited as long as the effects of the present invention are obtained. However, the atmosphere is preferably, for example, an atmosphere containing one or more reducing gases selected from the group consisting of: a hydrogen gas; an ammonia gas; and a carbon monoxide gas.

The concentration of the reducing gas in the reducing atmosphere is not particularly limited as long as the effects of the present invention are obtained. However, for example, the concentration is preferably 50 vol% or more, more preferably 60 vol% or more, still more preferably 70 vol% or more, still more preferably 80 vol% or more, still more preferably 90 vol% or more, still more preferably 95 vol% or more, and particularly preferably 100 vol%.

The temperature at which the first metal-supported catalyst impregnated with the precursor of the second metal is heated in the second gas-phase reduction treatment (hereinafter referred to as "second reduction heating temperature") is not particularly limited as long as the effects of the present invention are obtained. However, for example, the second reduction heating temperature is preferably 500°C or more, more preferably 550°C or more, still more preferably 600°C or more, and particularly preferably 650°C or more. The second reduction heating temperature may be, for example, 1,300°C or less, and is preferably 1,100°C or less, more preferably 1,000°C or less, and particularly preferably 900°C or less. The second reduction heating temperature may be specified by arbitrarily combining any one of the above-mentioned lower limit values and any one of the above-mentioned upper limit values. When a temperature in the above-mentioned ranges is adopted as the second reduction heating temperature, the precursor of the second metal can be efficiently reduced while excessive aggregation of the particles of the second metal is prevented.

The time period for which the heating is performed at the second reduction heating temperature in the second gas-phase reduction treatment (hereinafter referred to as "second reduction heating time") is not particularly limited as long as the effects of the present invention are obtained. However, for example, the second reduction heating time is preferably 5 minutes or more, more preferably 10 minutes or more, still more preferably 30 minutes or more, still more preferably 40 minutes or more, and particularly preferably 50 minutes or more. The second reduction heating time may be, for example, 24 hours or less, and is preferably 12 hours or less, more preferably 6 hours or less, and particularly preferably 3 hours or less. The second reduction heating time may be specified by arbitrarily combining any one of the above-mentioned lower limit values and any one of the above-mentioned upper limit values. When a time period in the above-mentioned ranges is adopted as the second reduction heating time, excessive aggregation of the particles of the second metal can be effectively prevented while the reduction of the precursor of the second metal is caused to sufficiently proceed.

The alloying treatment is performed by heating, after the second gas-phase reduction treatment, the metal-supported catalyst supporting the first metal and the second metal at the temperature at which the alloy of the first metal and the second metal is formed (hereinafter referred to as "alloying heating temperature").

The alloying heating temperature is not particularly limited as long as the effects of the present invention are obtained. However, for example, the alloying heating temperature is preferably 500°C or more, more preferably 550°C or more, still more preferably 600°C or more, and particularly preferably 650°C or more. The alloying heating temperature may be, for example, 1,300°C or less, and is preferably 1,100°C or less, more preferably 1,000°C or less, and particularly preferably 900°C or less. The alloying heating temperature may be specified by arbitrarily combining any one of the above-mentioned lower limit values and any one of the above-mentioned upper limit values. When a temperature in the above-mentioned ranges is adopted as the alloying heating temperature, the alloying can be caused to proceed while excessive aggregation of alloy particles is prevented.

The time period for which the heating is performed at the alloying heating temperature in the alloying treatment (hereinafter referred to as "alloying heating time") is not particularly limited as long as the effects of the present invention are obtained. However, for example, the alloying heating time is preferably 5 minutes or more, more preferably 10 minutes or more, still more preferably 30 minutes or more, still more preferably 40 minutes or more, and particularly preferably 50 minutes or more. The alloying heating time may be, for example, 24 hours or less, and is preferably 12 hours or less, more preferably 6 hours or less, and particularly preferably 3 hours or less. The alloying heating time may be specified by arbitrarily combining any one of the above-mentioned lower limit values and any one of the above-mentioned upper limit values. When a time period in the above-mentioned ranges is adopted as the alloying heating time, excessive aggregation of the alloy particles can be effectively prevented while the alloying is caused to sufficiently proceed.

An atmosphere in which the alloying treatment is performed is not particularly limited as long as the effects of the present invention are obtained. However, the atmosphere is preferably an inert gas atmosphere or a vacuum atmosphere. The inert gas atmosphere in which the alloying treatment is performed is not particularly limited as long as the effects of the present invention are obtained. However, the atmosphere is preferably, for example, an atmosphere containing one or more inert gases selected from the group consisting of: a nitrogen gas; an argon gas; and a helium gas.

The concentration of the inert gas in the inert gas atmosphere is not particularly limited as long as the effects of the present invention are obtained. However, for example, the concentration is preferably 50 vol% or more, more preferably 60 vol% or more, still more preferably 70 vol% or more, still more preferably 80 vol% or more, still more preferably 90 vol% or more, still more preferably 95 vol% or more, and particularly preferably 100 vol%.

In the second gas-phase reduction step, the second reduction heating temperature and the alloying heating temperature may each be independently determined, but the second reduction heating temperature is preferably, for example, the temperature at which the reduction of the second metal proceeds, and at which the alloying of the second metal and the first metal also proceeds.

That is, in the second gas-phase reduction step, for example, the first metal-supported catalyst impregnated with the precursor of the second metal is preferably heated in the reducing atmosphere at the second reduction heating temperature at which the alloying of the first metal and the second metal proceeds. In this case, in the second gas-phase reduction treatment, the reduction of the precursor of the second metal, and the alloying of the second metal and the first metal can be caused to proceed in parallel with each other, and hence, for example, time and cost required for the production of the metal-supported catalyst are effectively reduced. When the reduction of the precursor of the second metal, and the alloying of the second metal and the first metal are caused to proceed in parallel with each other, a time period from the reduction of the precursor to the alloying is shortened, and hence the aggregation of metal particles in a state in which the particles are not turned into an alloy is effectively suppressed. As a result, the support of alloy particles each having uniform alloy composition is achieved.

For example, the second reduction heating temperature at which the alloying proceeds is preferably 500°C or more, more preferably 550°C or more, still more preferably 600°C or more, and particularly preferably 650°C or more. The second reduction heating temperature at which the alloying proceeds may be, for example, 1,300°C or less, and is preferably 1,100°C or less, more preferably 1,000°C or less, and particularly preferably 900°C or less. The second reduction heating temperature at which the alloying proceeds may be specified by arbitrarily combining any one of the above-mentioned lower limit values and any one of the above-mentioned upper limit values.

The alloying in the reducing atmosphere may cause the deterioration of the carbon carrier. In this respect, in the second gas-phase reduction step, when the second gas-phase reduction treatment is performed first in the reducing atmosphere at the second reduction heating temperature at which the alloying proceeds to reduce the second metal, and then, the alloying treatment is further performed in the inert gas atmosphere, the alloying of the first metal and the second metal supported on the carbon carrier can be effectively performed while the deterioration of the carbon carrier is suppressed.

The timing at which the alloying treatment is performed in the second gas-phase reduction treatment is not particularly limited as long as the treatment is performed after the second gas-phase reduction treatment. However, it is preferred that the second gas-phase reduction treatment and the alloying treatment be continuously performed in one container. That is, in the second gas-phase reduction step, for example, the following is preferably performed: first, the second gas-phase reduction treatment is performed in the reducing atmosphere in the container; next, the reducing atmosphere in the container is replaced with the inert gas atmosphere; and then, the alloying treatment is performed in the inert gas atmosphere in the container.

In this case, in the second gas-phase reduction step, the following is preferably performed: first, the second gas-phase reduction treatment is performed in the reducing atmosphere in the container at the second reduction heating temperature; and then, the reducing atmosphere in the container is replaced with the inert gas atmosphere while a difference between a temperature in the container and the second reduction heating temperature is maintained at a temperature of 200°C or less, preferably 150°C or less, more preferably 100°C or less, still more preferably 70°C or less, and particularly preferably 50°C or less.

Further, in this case, after the reducing atmosphere in the container has been replaced with the inert gas atmosphere, the alloying treatment is preferably performed in the inert gas atmosphere in the container at the alloying heating temperature that differs from the second reduction heating temperature by 200°C or less, preferably 150°C or less, more preferably 100°C or less, still more preferably 50°C or less, still more preferably 30°C or less, and particularly preferably 10°C or less.

The method of the present invention may further include a post-treatment step after the second gas-phase reduction step. In the post-treatment step, the metal-supported catalyst obtained in the second gas-phase reduction step is subjected to treatment for removing an unnecessary metal and/or treatment for removing a noble metal oxide. The treatment for removing an unnecessary metal is not particularly limited as long as the effects of the present invention are obtained. However, the treatment is preferably, for example, washing treatment with an acid such as nitric acid. The treatment for removing a noble metal oxide is not particularly limited as long as the effects of the present invention are obtained. However, the treatment is preferably, for example, heating treatment in an inert gas atmosphere such as a nitrogen atmosphere. In the post-treatment step, when the metal-supported catalyst is subjected to the heating treatment in the inert gas atmosphere, the removal of an oxide on a metal surface produced in the treatment for removing an unnecessary metal and/or a reduction in metal surface roughness is induced to contribute to an improvement in durability and/or catalytic function of the catalyst.

The temperature at which the metal-supported catalyst is heated in the inert gas atmosphere in the post-treatment step (hereinafter referred to as "post-treatment heating temperature") is not particularly limited as long as the effects of the present invention are obtained. However, for example, the post-treatment heating temperature is preferably 500°C or more, more preferably 550°C or more, still more preferably 600°C or more, and particularly preferably 650°C or more. The post-treatment heating temperature may be, for example, 1,300°C or less, and is preferably 1,100°C or less, more preferably 1,000°C or less, and particularly preferably 900°C or less. The post-treatment heating temperature may be specified by arbitrarily combining any one of the above-mentioned lower limit values and any one of the above-mentioned upper limit values.

The method of the present invention may include an additional impregnation step and/or gas-phase reduction step. That is, the method of the present invention may further include, for example, a third impregnation step of further impregnating the metal-supported catalyst with a precursor of the first metal, the second metal, or a third metal that is different from the first metal and the second metal after the above-mentioned second gas-phase reduction step, and a third gas-phase reduction step of further performing gas-phase reduction treatment and alloying treatment after the third impregnation step. In this case, the third impregnation step is not particularly limited as long as the effects of the present invention are obtained. However, the step is preferably performed in the same manner as in, for example, the first impregnation step or the second impregnation step described above. The third gas-phase reduction step is not particularly limited as long as the effects of the present invention are obtained. However, the step is preferably performed in the same manner as in, for example, the first gas-phase reduction step or the second gas-phase reduction step described above.

According to the method of the present invention, a metal-supported catalyst having both excellent durability and an excellent catalytic function, while having a large noble metal content, is produced. That is, the above-mentioned catalyst of the present invention is preferably produced by the method of the present invention.

An electrode according to an embodiment of the present invention (hereinafter referred to as "electrode of the present invention") includes the catalyst of the present invention. That is, the electrode of the present invention is, for example, a battery electrode including an electrode base material and the catalyst of the present invention supported on the electrode base material. The electrode of the present invention is preferably a battery electrode. That is, the electrode of the present invention is preferably, for example, an electrode of a fuel cell (e.g., a polymer electrolyte fuel cell), an air cell, a water electrolyzer (e.g., a polymer electrolyte water electrolyzer), a redox flow battery, or a halogen battery.

The electrode of the present invention may be a cathode or an anode, but is preferably a cathode. That is, the electrode of the present invention is a cathode or an anode, preferably a cathode of a fuel cell, an air cell, a water electrolyzer, a redox flow battery, or a halogen battery.

A battery according to an embodiment of the present invention (hereinafter referred to as "battery of the present invention") includes the electrode of the present invention. Specifically, the battery of the present invention is preferably a fuel cell (e.g., a polymer electrolyte fuel cell), an air cell, a redox flow battery, or a halogen battery including the electrode of the present invention. The battery of the present invention is preferably a membrane electrode assembly (MEA) including the electrode of the present invention.

The battery of the present invention is a battery including the electrode of the present invention as a cathode or an anode, preferably a battery including the electrode of the present invention as a cathode. That is, the battery of the present invention is a fuel cell, an air cell, a redox flow battery, or a halogen battery including the electrode of the present invention as a cathode or an anode, preferably a fuel cell, an air cell, a redox flow battery, or a halogen battery including the electrode of the present invention as a cathode.

Next, specific Examples according to the embodiments of the present invention will be described.

Examples

[Production of Carbon Carrier]

1.0 g of polyacrylonitrile (PAN), 1.0 g of 2-methylimidazole, 6.0 g of zinc chloride ($ZnCl_2$), and 30 g of dimethylformamide were mixed. The solvent was removed from the resultant mixture by drying. The dried mixture was heated in an atmospheric atmosphere and subjected to infusibilization at 250°C.

The mixture after the infusibilization was carbonized by heating at 1,500°C under a gauge pressure of 0.90 MPa in a nitrogen atmosphere. Dilute hydrochloric acid was added to the carbonized material obtained by the carbonization, and the mixture was stirred. After that, the suspension containing the carbonized material was filtered with a filtration membrane, and the carbonized material was washed with distilled water until the filtrate became neutral. In this manner, metal removal treatment by washing with an acid was performed.

The carbonized material after the metal removal treatment was pulverized with a fine pulverizer until the median of its particle diameters reached 0.4 um or less. The carbonized material after the pulverization was dried in a vacuum so that its moisture was removed. After that, the carbonized material was subjected to heating treatment at 300°C in a nitrogen atmosphere. The carbonized material thus obtained was used as a carbon carrier C1500.

A carbonized material was obtained in the same manner as in the case of the carbon carrier C1500 described above except that a temperature of 2,000°C was employed as a carbonizing temperature instead of a temperature of 1,500°C, and the carbonized material was used as a carbon carrier C2000.

In addition, the carbon carrier C1500 was subjected to graphitization treatment by being heated at 1,700°C, 1,800°C, 1,900°C, 2,000°C, 2,100°C, 2,200°C, or 2,400°C under normal pressure in a nitrogen atmosphere. The carbonized materials thus obtained by the graphitization treatment at 1,800°C, 1,900°C, 2,000°C, 2,100°C, 2,200°C, and 2,400°C were used as a carbon carrier C1500-G1700, a carbon carrier C1500-G1800, a carbon carrier C1500-G1900, a carbon carrier C1500-G2000, a carbon carrier C1500-G2100, a carbon carrier C1500-G2200, and a carbon carrier C1500-G2400, respectively.

Commercially available Ketjen Black (EC600JD, manufactured by Lion Specialty Chemicals Co., Ltd.) was used as a carbon carrier KB. In addition, the carbon carrier KB was subjected to graphitization treatment by being heated at 2,000°C under normal pressure in a nitrogen atmosphere. The carbon material obtained by the graphitization treatment was used as a carbon carrier KB-G2000.

[Production of Metal-supported Catalyst]

In each of Example 1, Example 3 to Example 6, Example 14, Example C1, Example C5, and Example C7 to Example C10, catalyst metal particles were supported on a carbon carrier by such a gas-phase reduction method as described below. First, a first impregnation step was performed. That is, 1 g of the carbon carrier and 22.2 g of an aqueous solution containing such an amount of chloroplatinic acid ($H_2PtCl_6$) serving as a platinum precursor that a platinum concentration became 5 wt% (platinum content: 1.11 g) were stirred and mixed for 1 hour. The mixed solution was first kept under a reduced pressure of -0.10 MPa or less in terms of gauge pressure (specifically, from -0.10 MPa to -0.1013 MPa in terms of gauge pressure) for 1 hour, and was then kept under a pressure of 0.15 MPa or more in terms of gauge pressure (specifically, from 0.15 MPa to 0.20 MPa in terms of gauge pressure) for 1 hour, followed by stirring and mixing for 66 hours. The first impregnation step was performed while the temperature of the mixed solution was kept at 5°C or less (specifically, from 0°C to 5°C).

Next, a first gas-phase reduction step was performed. That is, the mixed liquid obtained in the first impregnation step was dried under a vacuum at 100°C, and was kept in a nitrogen atmosphere at 150°C so that its solvent component was volatilized. The resultant solid was subjected to heating treatment (first gas-phase reduction treatment) in a hydrogen atmosphere (hydrogen gas: 100 vol%) at 350°C for 120 minutes to provide a platinum-supported catalyst.

Next, a second impregnation step was performed. That is, 2.1 g of the platinum-supported catalyst obtained in the first gas-phase reduction step and 20 g of an aqueous solution containing such an amount of cobalt chloride ($CoCl_2$) serving as a cobalt precursor that a cobalt concentration became 0.56 wt% (cobalt content: 0.112 g) were stirred and mixed for 1 hour. The mixed solution was first kept under a reduced pressure of - 0.10 MPa or less in terms of gauge pressure (specifically, from -0.10 MPa to -0.1013 MPa in terms of gauge pressure) for 1 hour, and was then kept under a pressure of 0.15 MPa or more in terms of gauge pressure (specifically, from 0.15 MPa to 0.20 MPa in terms of gauge pressure) for 1 hour, followed by stirring and mixing for 18 hours. The second impregnation step was performed while the temperature of the mixed solution was kept at 5°C or less (specifically, from 0°C to 5°C).

Next, a second gas-phase reduction step was performed. That is, the mixed liquid obtained in the second impregnation step was dried under a vacuum at 100°C. The resultant solid was subjected to heating treatment (second gas-phase reduction treatment) in a hydrogen atmosphere (hydrogen gas: 100 vol%) at 700°C for 60 minutes. Subsequently, while the temperature of the atmosphere was maintained within the range of from 650°C to 750°C, the hydrogen atmosphere was replaced with a nitrogen atmosphere (nitrogen gas: 100 vol%), and the heated product was subjected to heating treatment (alloying treatment) in the nitrogen atmosphere at 700°C for 120 minutes to provide a platinum alloy-supported catalyst.

Next, a post-treatment step was performed. That is, to remove an unnecessary metal from the platinum alloy-supported catalyst obtained in the second gas-phase reduction step, the platinum alloy-supported catalyst and a 10% nitric acid solution were mixed for 2 hours. After that, the platinum alloy-supported catalyst and the acid solution were separated from each other by filtration, and the platinum alloy-supported catalyst was washed with distilled water until the filtrate became neutral. The platinum alloy-supported catalyst after the washing was dried in a vacuum at 60°C so that its moisture was removed.

After that, to remove nitric acid, the platinum alloy-supported catalyst was subjected to heating treatment in nitrogen at 300°C. Further, to reduce and remove a platinum oxide, the platinum alloy-supported catalyst was subjected to heating treatment in nitrogen at 700°C. Thus, there was obtained a metal-supported catalyst including: the carbon carrier (the carbon carrier C1500-G1700 in Example 1, the carbon carrier C1500-G1800 in Example 3, the carbon carrier C1500-G1900 in Example 4, the carbon carrier C1500-G2000 in Example 5, the carbon carrier C1500-G2100 in Example 6, the carbon carrier C2000 in Example 14, the carbon carrier C1500-G2000 in Example C1, the carbon carrier C1500 in Example C5, the carbon carrier C1500-G2200 in Example C7, the carbon carrier C1500-G2400 in Example C8, the carbon carrier KB in Example C9, and the carbon carrier KB-G2000 in Example C10); and alloy particles of platinum and cobalt supported on the carbon carrier.

In Example 2, a metal-supported catalyst including the carbon carrier C1500-G1800, and alloy particles of platinum and cobalt supported on the carbon carrier, was obtained in the same manner as in the case of, for example, Example 1 described above except that: in the first impregnation step, 14.3 g of an aqueous solution containing such an amount of chloroplatinic acid that a platinum concentration became 5 wt% (platinum content: 0.71 g) was used; and in the second impregnation step, 20 g of an aqueous solution containing such an amount of cobalt chloride that a cobalt concentration became 0.36 wt% (cobalt content: 0.072 g) was used.

In Example 7, a metal-supported catalyst including the carbon carrier C1500-G2000, and alloy particles of platinum and cobalt supported on the carbon carrier was obtained in the same manner as in the case of, for example, Example 1 described above except that in the second impregnation step, 20 g of an aqueous solution containing such an amount of cobalt chloride that a cobalt concentration became 0.32 wt% (cobalt content: 0.064 g) was used.

In Example 8, a metal-supported catalyst including the carbon carrier C1500-G2000, and alloy particles of platinum and cobalt supported on the carbon carrier, was obtained in the same manner as in the case of, for example, Example 1 described above except that the first impregnation step and the second impregnation step were each performed while the temperature of the mixed solution was kept at 25°C.

In Example 9, a metal-supported catalyst including the carbon carrier C1500-G2000, and alloy particles of platinum and cobalt supported on the carbon carrier was obtained in the same manner as in the case of, for example, Example 1 described above except that after the mixed liquid had been kept under reduced pressure and under pressure for 1 hour each, the mixed liquid were stirred and mixed for 18 hours instead of 66 hours.

In Example 10, a metal-supported catalyst including the carbon carrier C1500-G2000, and alloy particles of platinum and cobalt supported on the carbon carrier, was obtained in the same manner as in the case of, for example, Example 1 described above except that in the second impregnation step, 20 g of an aqueous solution containing such an amount of cobalt chloride that a cobalt concentration became 0.23 wt% (cobalt content: 0.045 g) was used.

In Example 11, a metal-supported catalyst including the carbon carrier C1500-G2000, and alloy particles of platinum and nickel supported on the carbon carrier, was obtained in the same manner as in the case of, for example, Example 1 described above except that in the second impregnation step, 20 g of an aqueous solution containing such an amount of nickel chloride hexahydrate ($NiCl_2 \cdot 6H_2O$) that a nickel concentration became 0.56 wt% (nickel content: 0.111 g) was used instead of the aqueous solution containing cobalt chloride.

In Example 12, a metal-supported catalyst including the carbon carrier C1500-G2000, and alloy particles of platinum, nickel, and manganese supported on the carbon carrier, was obtained in the same manner as in the case of, for example, Example 1 described above except that in the second impregnation step, 20 g of an aqueous solution containing such amounts of nickel chloride hexahydrate ($NiCl_2 \cdot 6H_2O$) and manganese chloride tetrahydrate ($MnCl_2 \cdot 4H_2O$) that a nickel concentration became 0.278 wt% (nickel content: 0.056 g) and a manganese concentration became 0.260 wt% (manganese content: 0.052 g) was used instead of the aqueous solution containing cobalt chloride.

In Example 13, first, a first impregnation step was performed in the same manner as in the case of, for example, Example 1 described above except that 17.8 g of an aqueous solution containing such an amount of chloroplatinic acid that a platinum concentration became 5 wt% (platinum content: 0.89 g) was used. After that, a first gas-phase reduction step, a second impregnation step, and a second gas-phase reduction step were each performed in the same manner as in the case of, for example, Example 1 described above.

Next, a third impregnation step was performed. That is, 1.99 g of the platinum alloy-supported catalyst obtained in the second gas-phase reduction step and 22.2 g of an aqueous solution containing such an amount of chloroplatinic acid that a platinum concentration became 1 wt% (platinum content: 0.22 g) were stirred and mixed for 1 hour. The mixed solution was first kept under a reduced pressure of -0.10 MPa or less in terms of gauge pressure (specifically, from -0.10 MPa to -0.1013 MPa in terms of gauge pressure) for 1 hour, and was then kept under a pressure of 0.15 MPa or more in terms of gauge pressure (specifically, from 0.15 MPa to 0.20 MPa in terms of gauge pressure) for 1 hour, followed by stirring and mixing for 66 hours. The third impregnation step was performed while the temperature of the mixed solution was kept at 5°C or less.

Next, a third gas-phase reduction step was performed. That is, the mixed liquid obtained in the third impregnation step was dried in a vacuum at 100°C, and was kept in nitrogen at 150°C so that its solvent component was volatilized. The resultant solid was subjected to heating treatment (gas-phase reduction treatment) in a hydrogen atmosphere (hydrogen gas: 100 vol%) at 700°C for 60 minutes. Subsequently, while the temperature of the atmosphere was maintained within the range of from 650°C to 750°C, the hydrogen atmosphere was replaced with a nitrogen atmosphere (nitrogen gas: 100 vol%), and the heated product was subjected to heating treatment (alloying treatment) in the nitrogen atmosphere at 700°C for 120 minutes. After that, a post-treatment step was performed in the same manner as in the case of, for example, Example 1 described above to provide a metal-supported catalyst including the carbon carrier C1500-G2000, and alloy particles of platinum and cobalt supported on the carbon carrier.

In Example 15, a metal-supported catalyst including the carbon carrier C1500-G2000, and alloy particles of platinum and cobalt supported on the carbon carrier, was obtained in the same manner as in the case of, for example, Example 1 described above except that in each of the first impregnation step and the second impregnation step, the mixed solution was kept under atmospheric pressure for 2 hours instead of keeping the mixed solution under reduced pressure for 1 hour, and under pressure for 1 hour.

In Example 16, a metal-supported catalyst including the carbon carrier C1500-G2000, and alloy particles of platinum and cobalt supported on the carbon carrier, was obtained in the same manner as in the case of, for example, Example 1 described above except that a temperature of 1,000°C was employed as a heating temperature in each of the hydrogen atmosphere and the nitrogen atmosphere in the second gas-phase reduction step instead of a temperature of 700°C.

In Example C1, a metal-supported catalyst including the carbon carrier C1500-G2000, and alloy particles of platinum and cobalt supported on the carbon carrier, was obtained in the same manner as in the case of, for example, Example 1 described above except that in the first impregnation step, 9.0 g of an aqueous solution containing such an amount of chloroplatinic acid that a platinum concentration became 5 wt% (platinum content: 0.45 g) was used.

In Example C2, a metal-supported catalyst including the carbon carrier C1500-G2000, and alloy particles of platinum and cobalt supported on the carbon carrier was obtained in the same manner as in the case of, for example, Example 1 described above except that: in the first impregnation step, 42.2 g of an aqueous solution containing such amounts of chloroplatinic acid and cobalt chloride that a platinum concentration became 5 wt% (platinum content: 1.1 g) and a cobalt concentration became 0.56 wt% (cobalt content: 0.112 g) was used instead of the aqueous solution containing chloroplatinic acid; in each of the first impregnation step, the mixed solution was kept under atmospheric pressure for 2 hours instead of keeping the mixed solution under reduced pressure for 1 hour, and under pressure for 1 hour; and the second impregnation step and the second gas-phase reduction step were not performed.

In Example C3, a metal-supported catalyst including the carbon carrier C1500-G2000, and alloy particles of platinum and cobalt supported on the carbon carrier, was obtained in the same manner as in the case of, for example, Example 1 described above except that a temperature of 500°C was employed as a heating temperature in each of the hydrogen atmosphere and the nitrogen atmosphere in the second gas-phase reduction step instead of a temperature of 700°C.

In Example C4, catalyst metal particles were supported on a carbon carrier by such a liquid-phase reduction method as described below. First, a first impregnation step was performed. That is, 1 g of the carbon carrier and 22.2 g of an aqueous solution containing such an amount of chloroplatinic acid that a platinum concentration became 5 wt% (platinum content: 1.11 g) were stirred and mixed for 1 hour. The mixed solution was first kept under a reduced pressure of -0.10 MPa or less in terms of gauge pressure (specifically, from -0.10 MPa to -0.1013 MPa in terms of gauge pressure) for 1 hour, and was then kept under a pressure of 0.15 MPa or more in terms of gauge pressure (specifically, from 0.15 MPa to 0.20 MPa in terms of gauge pressure) for 1 hour, followed by stirring and mixing for 66 hours. The first impregnation step was performed while the temperature of the mixed solution was kept at 5°C or less (specifically, from 0°C to 5°C).

Next, a first liquid-phase reduction step was performed. That is, liquid-phase reduction treatment was performed by: adding ethylene glycol as a reducing agent to the mixed liquid obtained in the first impregnation step; and keeping the mixture in air at 80°C for 4 hours. Thus, a platinum-supported catalyst was obtained.

Next, a second impregnation step was performed. That is, the mixed liquid obtained in the first liquid-phase reduction step was dried in a vacuum at 100°C, and was kept in nitrogen at 150°C so that its solvent component was volatilized. 2.0 g of the resultant platinum-supported catalyst and 20 g of an aqueous solution containing such an amount of cobalt chloride that a cobalt concentration became 0.56 wt% (cobalt content: 0.112 g) were stirred and mixed for 1 hour. The mixed solution was kept under a reduced pressure of -0.10 MPa or less in terms of gauge pressure (specifically, from -0.10 MPa to -0.1013 MPa in terms of gauge pressure) for 1 hour, and was then kept under a pressure of 0.15 MPa or more in terms of gauge pressure (specifically, from 0.15 MPa to 0.20 MPa in terms of gauge pressure) for 1 hour, followed by stirring and mixing for 18 hours. The second impregnation step was performed while the temperature of the mixed solution was kept at 5°C or less (specifically, from 0°C to 5°C).

Next, a second liquid-phase reduction step was performed. That is, liquid-phase reduction treatment was performed by: adding ethylene glycol as a reducing agent to the mixed liquid obtained in the second impregnation step; and keeping the mixture in air at 80°C for 4 hours.

Next, an alloying step was performed. That is, the mixed liquid obtained in the second liquid-phase reduction step was dried in a vacuum at 100°C. The resultant solid was subjected to heating treatment (alloying treatment) in a hydrogen atmosphere (hydrogen gas: 100 vol%) at 700°C for 60 minutes. Subsequently, while the temperature of the atmosphere was maintained within the range of from 650°C to 750°C, the hydrogen atmosphere was replaced with a nitrogen atmosphere (nitrogen gas: 100 vol%), and the heated product was subjected to heating treatment in the nitrogen atmosphere at 700°C for 120 minutes to provide a platinum alloy-supported catalyst.

Next, a post-treatment step was performed. That is, to remove an unnecessary metal from the platinum alloy-supported catalyst obtained in the alloying step, the platinum alloy-supported catalyst and a 10% nitric acid solution were mixed for 2 hours. After that, the platinum alloy-supported catalyst and the acid solution were separated from each other by filtration, and the platinum alloy-supported catalyst was washed with distilled water until the filtrate became neutral. The platinum alloy-supported catalyst after the washing was dried in a vacuum at 60°C so that its moisture was removed.

After that, to remove nitric acid, the platinum alloy-supported catalyst was subjected to heating treatment in nitrogen at 300°C. Further, to reduce and remove a platinum oxide, the platinum alloy-supported catalyst was subjected to heating treatment in nitrogen at 700°C. Thus, a metal-supported catalyst including the carbon carrier C1500-G2000, and alloy particles of platinum and cobalt supported on the carbon carrier was obtained.

In Example C6, a metal-supported catalyst including the carbon carrier C1500, and alloy particles of platinum and cobalt supported on the carbon carrier was obtained in the same manner as in the case of, for example, Example 1 described above, except that a temperature of 500°C was employed as a heating temperature in each of the hydrogen atmosphere and the nitrogen atmosphere in the second gas-phase reduction step instead of a temperature of 700°C.

[Raman Spectroscopy]

The metal-supported catalyst was analyzed by Raman spectroscopy. A Raman spectrum was measured with a HORIBA microlaser Raman spectroscopic measuring device (LabRAM, HORIBA Jobin Yvon). Laser used for the measurement had an excitation wavelength of 532 nm and an output of 50 mW, and the measurement was performed through a neutral density filter D3 under the conditions of exposure of 90 seconds × integration twice. Thus, the Raman spectrum was obtained.

The obtained Raman spectrum was subjected to baseline correction. That is, a straight line connecting the scattering intensity at which a Raman shift ($cm^{-1}$) was in the vicinity of 600 $cm^{-1}$ and the scattering intensity at which a Raman shift ($cm^{-1}$) was in the vicinity of 2,000 $cm^{-1}$ was determined as a baseline, and the baseline was subtracted from each intensity of the scattering spectrum, to thereby perform the baseline correction.

Next, a D band having a peak top in the vicinity of a Raman shift of 1,340 $cm^{-1}$ (specifically, in the range of 1,320 $cm^{-1}$ or more and 1,360 $cm^{-1}$ or less) was identified. Then, a Raman shift ($cm^{-1}$) $B_d$ corresponding to an intensity equal to one half of an intensity $I_d$ of the D band (intensity of the peak top of the D band) was subtracted from a Raman shift ($cm^{-1}$) $A_d$ corresponding to the intensity $I_d$ of the D band. Thus, a Raman D half width at half maximum ($cm^{-1}$) was calculated. That is, the Raman D half width at half maximum of the metal-supported catalyst was calculated from the following equation: Raman D half width at half maximum ($cm^{-1}$) = $A_d$ ($cm^{-1}$) - $B_d$ ($cm^{-1}$).

Next, a G band having a peak top in the vicinity of a Raman shift of 1,600 $cm^{-1}$ (specifically, in the range of 1,550 $cm^{-1}$ or more and 1,700 $cm^{-1}$ or less) and a 2D band having a peak top in the vicinity of a Raman shift of 2,680 $cm^{-1}$

(specifically, in the range of 2, 600 cm$^{-1}$ or more and 2, 800 cm$^{-1}$ or less) were identified. Then, an intensity $I_{2d}$ of the 2D band (intensity of the peak top of the 2D band) was divided by an intensity $I_g$ of the G band (intensity of the peak top of the G band). Thus, the ratio of the intensity $I_{2d}$ of the 2D band to the intensity $I_g$ of the G band (Raman 2D/G ratio) was calculated. That is, the Raman 2D/G ratio of the carbon carrier was calculated from the following equation: Raman 2D/G ratio=$I_{2d}/I_g$.

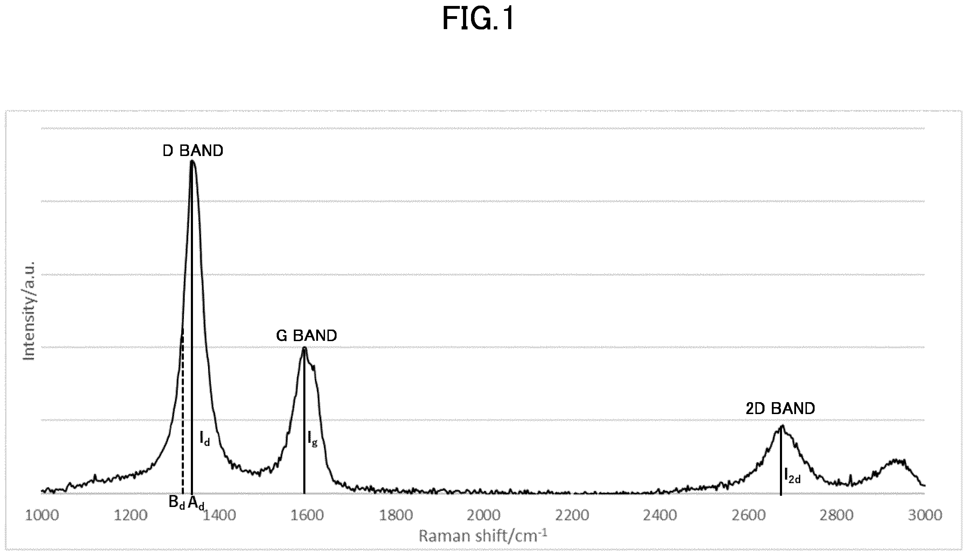

Herein, FIG. 1 shows the result of the analysis of a Raman spectrum obtained by the Raman spectroscopy of the metal-supported catalyst of Example 2 as an example of the Raman spectrum. In FIG. 1, an axis of abscissa represents a Raman shift (cm$^{-1}$), an axis of ordinate represents a scattering intensity after the baseline correction, $A_d$ represents a Raman shift (cm$^{-1}$) corresponding to the peak top of the D band, and $B_d$ represents a Raman shift (cm$^{-1}$) corresponding to a Raman spectrum exhibiting an intensity equal to one half of the intensity $I_d$ of the D band (height of the peak top of the D band) on a low wavenumber side with respect to the $A_d$. The intensity $I_g$ of the G band (height of the peak top of the G band) and the intensity $I_{2d}$ of the 2D band (height of the peak top of the 2D band) are each also shown in FIG. 1.

[Metal Content: Inductively Coupled Plasma Optical Emission Spectrometry]

The platinum content and non-platinum metal (metal other than platinum) content of the metal-supported catalyst were measured by inductively coupled plasma optical emission spectrometry (ICP-OES). That is, first, 100 mg of the metal-supported catalyst was heated and kept under an atmospheric atmosphere at 800°C for 3 hours so that non-metal components (components other than metals) in the metal-supported catalyst were removed.

Next, the metal-supported catalyst was immersed in 5 mL of aqua regia and heated at 50°C for 1 hour so that the metals in the metal-supported catalyst were dissolved. Further, distilled water was added to dilute the resultant so that the volume became 50 mL. Thus, a metal solution was obtained. After that, the platinum concentration and non-platinum metal concentration of the resultant metal solution were measured with a sequential plasma emission spectrometer (ICPS-8100, manufactured by Shimadzu Corporation).

Then, the platinum concentration (mg/mL) and non-platinum metal concentration (mg/mL) of the metal solution were multiplied by the volume (50 mL) of the metal solution to provide a platinum weight (mg) and a non-platinum metal weight (mg) per 100 mg of the metal-supported catalyst.

Further, the platinum weight (mg) and non-platinum metal weight (mg) contained in the metal-supported catalyst were divided by the weight of the metal-supported catalyst, i.e., 100 mg, and was multiplied by 100. Thus, a platinum content (wt%) and a non-platinum metal content (wt%) obtained by the ICP-OES were calculated. In addition, the total of the platinum content (wt%) and non-platinum metal content (wt%) of the metal-supported catalyst was obtained as the metal content (wt%) of the metal-supported catalyst.

[Specific Surface Area and Average Pore Diameter]

The specific surface area and average pore diameter of a metal-supported catalyst based on a nitrogen adsorption method were measured with a specific surface area/pore distribution-measuring apparatus (TriStar II 3020, manufactured by Shimadzu Corporation) and analysis software (TriStar II 3020) included in the apparatus.

That is, first, 0.1 g of the metal-supported catalyst was kept at 100°C and $6.7 \times 10^{-2}$ Pa for 3 hours so that water adsorbing to the metal-supported catalyst was removed. Next, a change in amount of adsorption of nitrogen to the metal-supported catalyst in association with a change in pressure of a nitrogen gas was measured at a temperature of 77 K to provide a nitrogen adsorption isotherm at a temperature of 77 K.

Then, the BET specific surface area (m$^2$/g) of the metal-supported catalyst based on the nitrogen adsorption method was obtained from the nitrogen adsorption isotherm at a temperature of 77 K by a BET method. Further, a BET specific surface area (m$^2$/g-carbon carrier) per 1 g of a carbon carrier in the metal-supported catalyst was calculated on the basis of the BET specific surface area (m$^2$/g) of the metal-supported catalyst and the metal content (wt%) of the metal-supported catalyst obtained by the above-mentioned ICP-OES. That is, first, the weight ratio of the carbon carrier in the metal-supported catalyst was calculated from the following equation: weight ratio of carbon carrier=1-(metal content (wt%) obtained by ICP-OES)/100. Next, the BET specific surface area (m$^2$/g-carbon carrier) per 1 g of the carbon carrier was calculated by dividing the BET specific surface area (m$^2$/g) of the metal-supported catalyst by the resultant weight ratio of the carbon carrier. In addition, the total pore volume (cm$^3$/g) of the metal-supported catalyst was obtained from an adsorption amount at a point corresponding to a relative pressure $P/P_0$ of 0.98 in the nitrogen adsorption isotherm at a temperature of 77 K.

Then, the average pore diameter (nm) of the metal-supported catalyst was calculated with the analysis software included in the specific surface area/pore distribution-measuring apparatus from the following equation: average pore diameter (nm)=$4 \times \{$total pore volume (cm$^3$/g)$\times 10^{21}\}$ /$\{$ specific surface area (m$^2$/g)$\times 10^{18}\}$ .

[Alloy Composition Nonuniformity]

The alloy composition nonuniformity was calculated from the following equation (I) by using: the measured lattice constant of a platinum alloy in the metal-supported catalyst determined by the powder X-ray diffraction (XRD) of the metal-supported catalyst; and the theoretical lattice constant of the platinum alloy in the metal-supported catalyst determined by the ICP-OES of the metal-supported catalyst. That is, the alloy composition nonuniformity was calculated by: subtracting a value obtained by dividing the theoretical lattice constant by the measured lattice constant from 1; and multiplying the answer by 100.

alloy composition nonuniformity= (1-theoretical lattice constant/ measured lattice constant) X100　　　　　　(I)

The measured lattice constant of the platinum alloy in the metal-supported catalyst was determined from an XRD pattern obtained by the powder X-ray diffraction of the metal-supported catalyst by using Bragg's equation. Specifically, XRD measurement was performed with an X-ray diffractometer (Rigaku RINT2100/PC, Rigaku Corporation). A voltage and a current to be applied to an X-ray tube were set to 50 kV and 300 mA, respectively. A sampling interval, a scanning speed, and a measurement angle range (2Θ) were set to 0.1°, 1°/min, and from 5° to 90°, respectively. CuKα was used as an incident X-ray. A sample thickness was set to 0.5 mm, and a divergence slit width β was set to 2/3°.

A lattice spacing was calculated from the position (diffraction angle 2θ) of the peak top of a diffraction peak corresponding to the (111) plane of the platinum alloy, which appeared at a position at which the diffraction angle 2θ of the resultant XRD pattern fell within the range of from 39° to 44°, by using the following Bragg's equation: $2d\sin\theta=n\lambda$. In the Bragg's equation, "d" represents the lattice spacing, $\theta$ represents the incident angle of the X-ray, $\lambda$ represents the incident wavelength of the X-ray, and "n" represents an integer.

Then, a lattice constant (measured lattice constant) "a" was calculated by using the following relational equation between the lattice spacing and plane indices: $d=a/(h^2+k^2+l^2)^{0.5}$. In the relational equation between the lattice spacing and the plane indices, "d" represents the lattice spacing, "a" represents the lattice constant (measured lattice constant), and "h", "k", and "l" each represent a plane index.

The theoretical lattice constant of the platinum alloy in the metal-supported catalyst was calculated by Vegard's law through the determination of the molar fractions of platinum and a non-platinum metal by the performance of ICP-OES measurement. Vegard's law is an empirical rule representing a relationship between the composition and lattice constant of an alloy, and the lattice constant (theoretical lattice constant) "a" of the alloy is calculated from the following equation (V).

$$a=N_A a_A + N_B a_B + N_C a_C + \cdots \qquad (V)$$

In the equation (V), "a" on the left-hand side represents the lattice constant (theoretical lattice constant) of the alloy, N represents the molar fraction of each metal (e.g., $N_A$, $N_B$, and $N_C$ represent the molar fractions of a metal A, a metal B, and a metal C, respectively), and "a" on the right-hand side represents the lattice constant of a simple substance of each metal (e.g., $a_A$, $a_B$, and $a_C$ represent the lattice constants of the simple substances of the metal A, the metal B, and the metal C, respectively). Specifically, for example, when the alloy includes two metals, that is, the metal A and the metal B, the theoretical lattice constant "a" of the alloy is calculated from the following equation: $a=N_A a_A + N_B a_B$. In addition, when the alloy includes three metals, that is, the metal A, the metal B, and the metal C, the theoretical lattice constant "a" of the alloy is calculated from the following equation: $a=N_A a_A + N_B a_B + N_C a_C$. When the alloy includes four or more metals, the term "$N_X a_X$" (X represents a metal kind) of a fourth or subsequent metal is added to the right-hand side of the equation (V).

The molar fraction of each metal was determined through the measurement of the metal content of the metal-supported catalyst by ICP-OES. That is, the respective molar amounts of platinum and one or more non-platinum metals were calculated by dividing the content (wt%) of platinum and the contents (wt%) of the one or more non-platinum metals obtained by the ICP-OES as described above by the atomic weights of the respective metals. Then, the molar fraction of each metal was calculated by dividing the molar amount of the metal by the total of the molar amounts of all the metals. The theoretical lattice constant of the platinum alloy was determined by substituting the molar fractions thus determined into the equation of Vegard's law described above.

[Half-maximum Asymmetry and 1/4-maximum Asymmetry]

A half-maximum asymmetry and a 1/4-maximum asymmetry were determined from the following equation (II) and equation (III), respectively on the basis of the XRD pattern of a metal-supported catalyst obtained as described above.

$$\text{half-maximum asymmetry} = |(D_m - D_{Lh}) - (D_{Hh} - D_m)| \qquad (II)$$

$$1/4\text{-maximum asymmetry} = |(D_m - D_{Lq}) - (D_{Hq} - D_m)| \qquad (III)$$

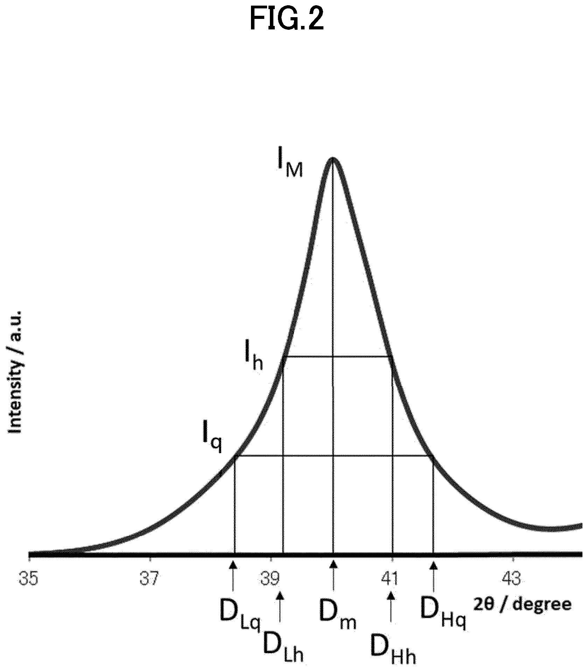

The equation (II) and the equation (III) are described with reference to a typical XRD pattern shown in FIG. 2. As shown in FIG. 2, $D_m$ represents the value of the diffraction angle $2\theta$ (peak top position) at which a diffraction line exhibits the maximum intensity $I_M$ in a range corresponding to a diffraction angle $2\theta$ of the XRD pattern of the metal-supported catalyst of from 35° to 44° (range of the diffraction angle $2\theta$ in which the diffraction peak of the (111) plane of the platinum alloy appears), $D_{Lh}$ represents the value of the smallest diffraction angle $2\theta$ among the diffraction angles $2\theta$ at which the diffraction line exhibits an intensity In equal to one half of the maximum intensity $I_M$ in the range corresponding to a diffraction angle $2\theta$ of from 35° to 44°, $D_{Hh}$ represents the value of the largest diffraction angle $2\theta$ among the diffraction angles $2\theta$ at which the diffraction line exhibits the intensity $I_h$ equal to one half of the maximum intensity $I_M$ in the range corresponding to a diffraction angle $2\theta$ of from 35° to 44°, $D_{Lq}$ represents the value of the smallest diffraction angle $2\theta$ among the diffraction angles $2\theta$ at which the diffraction line exhibits an intensity $I_q$ equal to one quarter of the maximum intensity $I_M$ in the range corresponding to a diffraction angle $2\theta$ of from 35° to 44°, and $D_{Hq}$ represents the value of the largest diffraction angle $2\theta$ among the diffraction angles $2\theta$ at which the diffraction line exhibits the intensity $I_q$ equal to one quarter of the maximum intensity $I_M$ in the range corresponding to a diffraction angle $2\theta$ of from 35° to 44°.

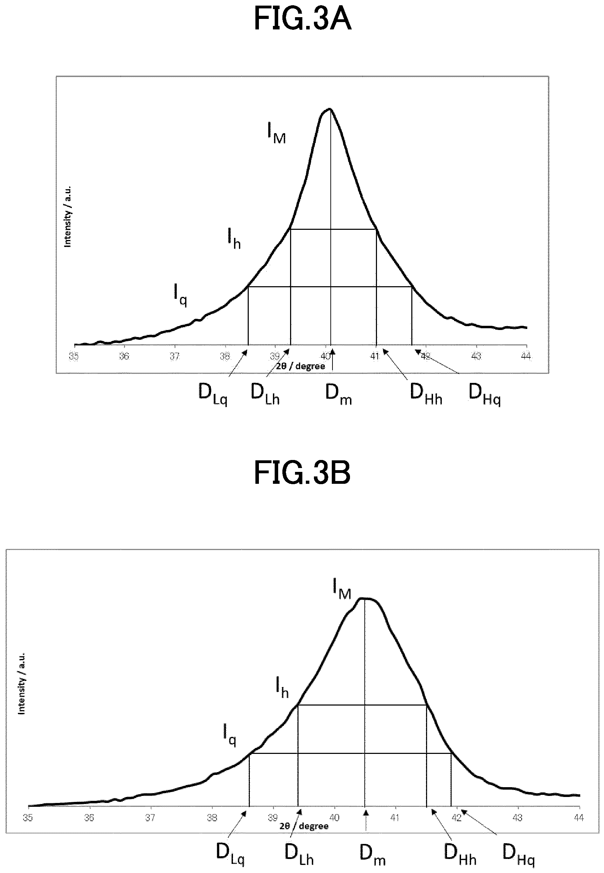

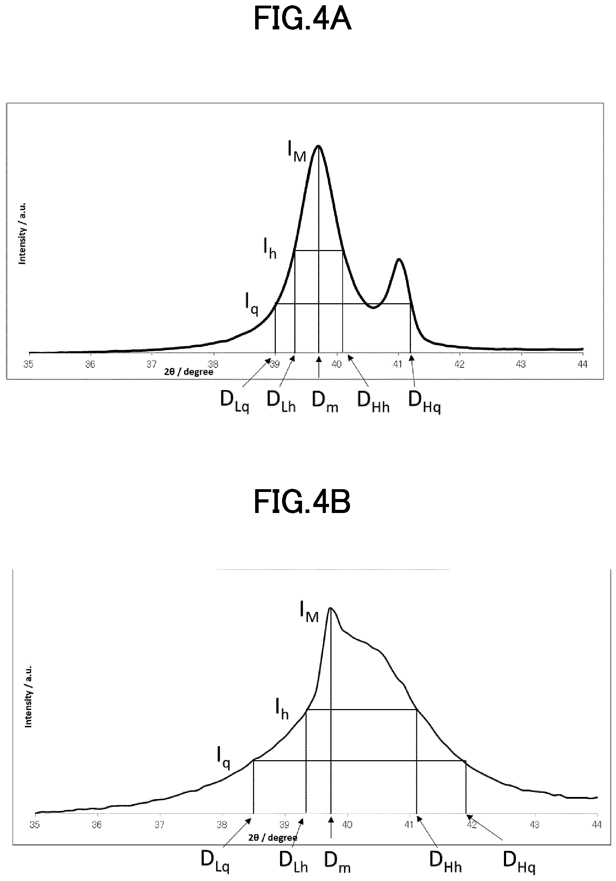

FIG. 3A and FIG. 3B show XRD patterns obtained for the metal-supported catalysts of Example 2 and Example 6, respectively. In addition, FIG. 4A and FIG. 4B show XRD patterns obtained for the metal-supported catalysts of Example C2 and Example C4, respectively.

[Platinum/Non-platinum Metal Molar Ratio]

The ratio (Pt/M molar ratio) of the molar amount of platinum to the molar amount of a non-platinum metal for forming platinum alloy particles supported on a metal-supported catalyst was calculated by dividing the molar fraction of platinum by the molar fraction of the non-platinum metal, the molar fractions having been determined by ICP-OES as described above.

[Number-average Particle Diameter and Volume-average Particle Diameter of Catalyst Metal Particles: Powder X-ray Diffraction]

The number-average particle diameter (nm) and volume-average particle diameter (nm) of catalyst metal particles supported on a carbon carrier in a metal-supported catalyst were measured by a powder X-ray diffraction (XRD) method. That is, first, a sample of a powdery metal-supported catalyst was placed in the recess (2 cm$\times$2 cm$\times$0.5 mm (thickness)) of a glass sample plate, and was pressed with a microscope slide. Thus, the sample was uniformly filled into the recess so that the surface of the sample and a reference surface matched each other. Next, the glass sample plate was fixed to a wide-angle X-ray diffraction sample table so that the form of the filled sample did not collapse.

Then, powder X-ray diffraction measurement was performed with an X-ray diffractometer (Rigaku RINT2100/PC, Rigaku Corporation). A voltage and a current to be applied to an X-ray tube were set to 50 kV and 300 mA, respectively. A sampling interval, a scanning speed, and a measurement angle range ($2\theta$) were set to 0.1°, 1°/min, and from 5° to 90°, respectively. CuK$\alpha$ was used as an incident X-ray. A sample thickness was set to 0.5 mm, and a divergence slit width $\beta$ was set to 2/3°.

The resultant XRD pattern was subjected to peak separation through use of a Gaussian function as will be described later, and a crystallite diameter corresponding to each peak obtained by the peak separation was determined with Scherrer's equation. The number-average particle diameter of the catalyst metal particles was calculated by weighted averaging of the resultant crystallite diameters using a number, that is, "peak area proportion/crystallite diameter$^3$" as a weight. Meanwhile, the volume-average particle diameter of the catalyst metal particles was calculated by weighted averaging of the resultant crystallite diameters using a volume, that is, "peak area proportion" as a weight.

A method of determining the number-average particle diameter (nm) and the volume-average particle diameter (nm) is more specifically described below. For the metal-supported catalyst supporting the platinum alloy particles as the catalyst metal particles, the (111) diffraction line of the platinum alloy appears at a position at which a diffraction angle ($2\theta$) is in the vicinity of 40° (for example, in the range of from 35° to 44°) in an XRD pattern obtained by powder X-ray diffraction with a CuK$\alpha$ ray. In addition, the diffraction line includes a diffraction line derived from pure platinum, a diffraction line derived from the platinum alloy, and a diffraction line derived from the carbon structure of the carbon carrier.

The diffraction line derived from pure platinum is defined as a diffraction line having a peak top at a position at which the diffraction angle ($2\Theta$) is 39.6° or more and less than 39.8°. The diffraction line derived from the platinum alloy is defined as a diffraction line having a peak top at a position at which the diffraction angle ($2\Theta$) is 39.9° or more and less than 43.0°. The diffraction line derived from the carbon structure of the carbon carrier is defined as a diffraction line having a peak top at a position at which the diffraction angle ($2\Theta$) is 43.3° or more and less than 43.7°.

When the metal-supported catalyst includes a plurality of platinum alloys that have different composition and/or crystal structure from each other, a plurality of diffraction lines derived from the platinum alloys appear. The diffraction angle at which the peak top of the diffraction line derived from the platinum alloy is positioned is determined by the composition and crystal structure thereof.

For example, a diffraction line derived from a platinum-cobalt alloy whose composition is represented by $Pt_xCo$ (X=1 to 20) is defined as a diffraction line having a peak top at a position at which the diffraction angle is 39.9° or more and less than 41.8°. A diffraction line derived from a platinum-nickel alloy whose composition is represented by $Pt_xNi$ (X=1 to 20) is defined as a diffraction line having a peak top at a position at which the diffraction angle is 39.9° or more and less than 42.0°. A diffraction line derived from a platinum-nickel-manganese alloy whose composition is represented by $Pt_xNi_1Mn_1$ (X=2 to 40) is defined as a diffraction line having a peak top at a position at which the diffraction angle is 39.9° or more and less than 41.2°.

Specifically, for example, a diffraction line derived from a platinum-cobalt alloy whose composition is represented by PtCo is defined as a diffraction line having a peak top at a position at which the diffraction angle is 41.4° or more and less than 41.8°. In addition, a diffraction line derived from a platinum-cobalt alloy whose composition is represented by $Pt_3Co$ is defined as a diffraction line having a peak top at a position at which the diffraction angle is 40.3° or more and less than 41.2°. Further, a diffraction line derived from a platinum-cobalt alloy whose composition is represented by $Pt_7Co$ is defined as a diffraction line having a peak top at a position at which the diffraction angle is 39.9° or more and less than 40.3°.

In addition, for example, a diffraction line derived from a platinum-nickel alloy whose composition is represented by PtNi is defined as a diffraction line having a peak top at a position at which the diffraction angle is 41.6° or more and less than 42.0°. In addition, a diffraction line derived from a platinum-nickel alloy whose composition is represented by $Pt_3Ni$ is defined as a diffraction line having a peak top at a position at which the diffraction angle is 40.4° or more and less than 41.2°. In addition, a diffraction line derived from a platinum-nickel alloy whose composition is represented by $Pt_7Ni$ is defined as a diffraction line having a peak top at a position at which the diffraction angle is 39.9° or more and less than 40.3°. A diffraction line derived from a platinum-nickel-manganese alloy whose composition is represented by $Pt_6Ni_1Mn_1$ is defined as a diffraction line having a peak top at a position at which the diffraction angle is 40.1° or more and less than 40.8°.

When the metal-supported catalyst includes a plurality of platinum particles that are identical in composition and crystal structure to each other, and different in crystallite diameter from each other, a plurality of diffraction lines appear, each having a peak top at substantially the same diffraction angle position and having different full widths at half maximum.

Actually, in the XRD pattern obtained for the metal-supported catalyst, the (111) diffraction line of the platinum alloy appeared at a position at which the diffraction angle (2θ) was in the vicinity of 40°. In view of the foregoing, first, baseline correction was performed. That is, a straight line connecting the diffraction intensity at which the diffraction angle (2θ) was from 35° to 37° and the diffraction intensity at which the diffraction angle (2θ) was from 50° to 52° was determined as a baseline, and the baseline was subtracted from each intensity of the diffraction line, to thereby perform the baseline correction.

Next, the diffraction line after the baseline correction was separated into a peak derived from one or more kinds of pure platinum and/or a peak derived from one or more platinum alloys, and a peak derived from carbon. The separation of the diffraction line was performed by assuming that each of a plurality of peaks obtained by the separation was represented by a Gaussian function and optimizing the intensity of each of the Gaussian functions of the plurality of peaks, the diffraction angle of a peak top, and the full width at half maximum so that a residual square sum obtained by adding, for all the diffraction angles, a square of a difference (residue) from the sum of the intensity of the diffraction line and each intensity of the plurality of peaks at each diffraction angle of an XRD pattern became minimum.

Herein, the peak separation of the (111) diffraction line of a platinum-cobalt alloy having a peak top at a position at which the diffraction angle (2θ) is in the vicinity of 40° (in the range of from 39° to 44°) is described with reference to the XRD pattern obtained by the powder XRD measurement of the metal-supported catalyst of Example 2.

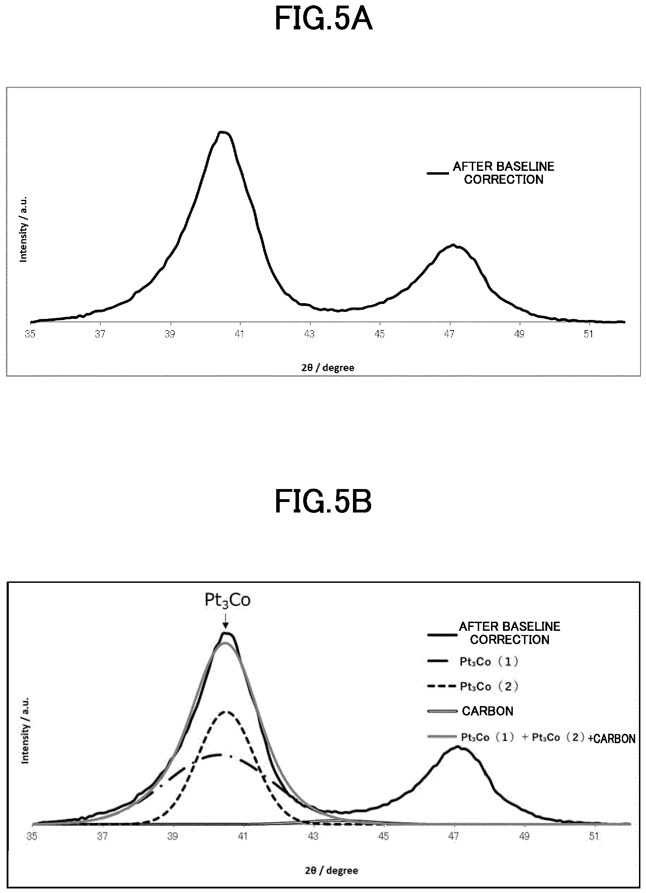

In the XRD pattern of the metal-supported catalyst of Example 2, as shown in FIG. 5A, a diffraction line having a peak top at a position at which the diffraction angle (2Θ) was 40.5° appeared after the baseline correction. The shape of the middle part of the diffraction line was significantly smaller in width than the shape of the lower part thereof, and the shape of the upper part thereof was even smaller in width than the shape of the middle part. Accordingly, it was conceived that, at the peak at which the diffraction angle (2θ) was 40.5°, at least two diffraction lines including a diffraction line of first $Pt_3Co$ having a relatively large full width at half maximum and a diffraction line of second $Pt_3Co$ different in crystallite diameter from the first $Pt_3Co$ and having a smaller full width at half maximum overlapped each other. In addition, it was conceived that the metal-supported catalyst included the carbon carrier, and hence a diffraction line derived from carbon was also included at a diffraction angle (2θ) in the vicinity of 43.5°.

In view of the foregoing, the diffraction line having a peak top at a position at which the diffraction angle (2Θ) was 40.5° was separated into three components including a peak derived from the first $Pt_3Co$, a peak derived from the second $Pt_3Co$, and a peak derived from carbon by the above-mentioned peak separation method.

The result of the peak separation into the three components is shown in FIG. 5B. In FIG. 5B, a diffraction line "after baseline correction" represents a diffraction line obtained by subjecting a diffraction line obtained by XRD measurement to the baseline correction, and a peak of "$Pt_3Co(1)$", a peak of "$Pt_3Co(2)$", and a peak of "carbon" represent a peak derived from the first $Pt_3Co$, a peak derived from the second $Pt_3Co$, and a peak derived from carbon, which are obtained by the peak separation of the diffraction line "after baseline correction", respectively.

However, as shown in FIG. 5B, when the peak separation of the diffraction line after the baseline correction was performed so that the spread of a tail at a diffraction angle (2Θ) in the vicinity of from 35° to 39° and an intensity up to the 8th station of a peak matched each other, the acuteness of the peak top in the vicinity of 40.5° could not be reproduced.

In this respect, as described above, the diffraction line derived from the platinum-cobalt alloy represented by $Pt_3Co$ has a peak top at a position at which the diffraction angle is 40.3° or more and less than 41.2°. Accordingly, it was conceived that the diffraction line derived from the platinum-cobalt alloy represented by $Pt_3Co$ was mixed with the diffraction line of the third $Pt_3Co$ having a peak top at a position in the vicinity of 40.5°.

In view of the foregoing, the diffraction line having a peak top at a position at which the diffraction angle (2Θ) was 40.5° was separated by the above-mentioned peak separation method into four components including a peak derived from the first $Pt_3Co$, a peak derived from the second $Pt_3Co$, a peak derived from the third $Pt_3Co$, and a peak derived from carbon.

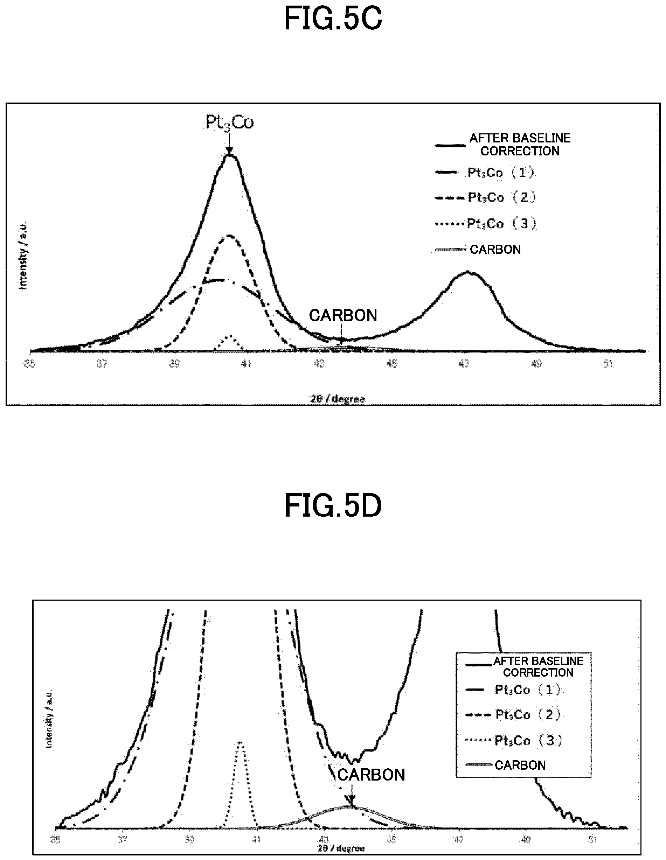

The result of the peak separation into the four components is shown in FIG. 5C. In addition, FIG. 5D shows part of FIG. 5C in an enlarged manner. In FIG. 5C and FIG. 5D, a diffraction line "after baseline correction" represents a diffraction line obtained by subjecting a diffraction line obtained by XRD measurement to the baseline correction, and a peak of "PtaCo (1)", a peak of "$Pt_3Co$ (2)", a peak of "$Pt_3Co$ (3)", and a peak of "carbon" represent a peak derived from the first $Pt_3Co$, a peak derived from the second $Pt_3Co$, a peak derived from the third $Pt_3Co$, and a peak derived from carbon, which are obtained by the peak separation of the diffraction line "after baseline correction", respectively.

A peak obtained by adding the peak of "$Pt_3Co(1)$", the peak of "$Pt_3Co(2)$", the peak of "$Pt_3Co(3)$", and the peak of "carbon" substantially completely matched the diffraction line "after baseline correction", and hence is not shown in FIG. 5C and FIG. 5D.

As described above, a residual square sum in the case of the peak separation into the four components was reduced compared to the residual square sum in the case of the peak separation into the three components, and became a significantly small value. Accordingly, it was concluded that the first $Pt_3Co$ particles, the second $Pt_3Co$ particles, and the third $Pt_3Co$ particles were supported as the platinum-cobalt alloy particles on the metal-supported catalyst of Example 2.

Then, the crystallite diameter of each of the first $Pt_3Co$ particles, the second $Pt_3Co$ particles, and the third $Pt_3Co$ particles was calculated from the following Scherrer's equation: crystallite diameter (nm)=$K\lambda/\beta\cos\theta$. Herein, in the Scherrer's equation, K represents a Scherrer constant (0.94), $\lambda$ represents the wavelength of a CuK$\alpha$ ray (0.15418 nm), $\beta$ represents a full width at half maximum (radian), and $\theta$ represents a diffraction angle (radian).

That is, for example, the crystallite diameter of the first $Pt_3Co$ particles was calculated by substituting the diffraction angle and full width at half maximum of the separation peak of "$Pt_3Co(1)$" in the XRD pattern shown in FIG. 5C into the above-mentioned Scherrer's equation. As a result, the crystallite diameter of the first $Pt_3Co$ particles was calculated to be 2.3 nm, the crystallite diameter of the second $Pt_3Co$ particles was calculated to be 5.6 nm, and the crystallite diameter of the third $Pt_3Co$ particles was calculated to be 18.8 nm.

In addition, the respective areas of the three $Pt_3Co$ separation peaks obtained by the above-mentioned peak separation (i.e., the peak area of "$Pt_3Co(1)$", the peak area of "$Pt_3Co(2)$", and the peak area of "$Pt_3Co(3)$") were each divided by the sum of the areas of the three $Pt_3Co$ separation peaks and multiplied by 100. Thus, the peak area proportion (%) of each of the $Pt_3Co$ separation peaks was calculated. As a result, the peak area proportion of the first $Pt_3Co$ particles was calculated to be 56.4%, the peak area proportion of the second $Pt_3Co$ particles was calculated to be 42.0%, and the peak area proportion of the third $Pt_3Co$ particles was calculated to be 1.6%.

Then, the volume-average particle diameter of the catalyst metal particles was calculated by weighted averaging using those peak area proportions as weights. Specifically, the volume-average particle diameter of the platinum alloy particles supported on the metal-supported catalyst of Example 2 was calculated to be 4.0 nm from the following equation: volume-average particle diameter (nm)=$\{(2.3\times56.4)+(5.6\times42.0)+(18.8\times1.6)\}/(56.4+42.0+1.6)$.

Further, the number-average particle diameter of the catalyst metal particles was calculated by weighted averaging using "peak area proportion/crystallite diameter$^3$" as a weight. Specifically, the number-average particle diameter of the $Pt_3Co$ particles supported on the metal-supported catalyst of Example 2 was calculated to be 2.5 nm from the following equation: number-average particle diameter (nm)=$\{(2.3\times56.4/2.3^3)+(5.6\times42.0/5.6^3)+(18.8\times1.6/18.8^3)\}/(56.4/2.3^3+42.0/5.6^3+1.6/18.8^3)$.

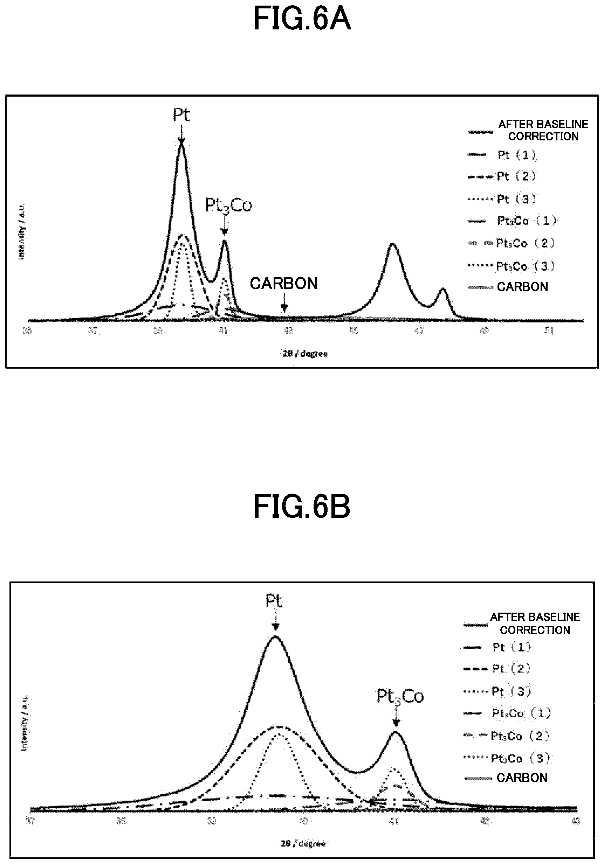

FIG. 6A shows the result of peak separation performed in the XRD pattern obtained for the metal-supported catalyst of Example C2. FIG. 6B shows part of the XRD pattern shown in FIG. 6A in an enlarged manner. As shown in each of FIG. 6A and FIG. 6B, a diffraction line after its baseline correction was separated into a peak derived from one kind of pure platinum, a peak derived from one kind of platinum-cobalt alloy, and a peak derived from carbon.

In the XRD pattern obtained by the powder XRD measurement of the metal-supported catalyst of Example C2, diffraction lines having peak tops at positions at which the diffraction angles (2Θ) were 39.7° and 41.0° appeared after the baseline correction. The shape of the middle part of the diffraction line of each of the peaks was significantly smaller in width than the shape of the lower part thereof, and the shape of the upper part thereof was even smaller in width than the shape of the middle part. Accordingly, it was conceived that three diffraction lines, that is, the diffraction line of first Pt having a relatively large full width at half maximum, the diffraction line of second Pt, which was different in crystallite diameter from the first Pt and had a smaller full width at half maximum, and the diffraction line of third Pt, which was different in crystallite diameter from the first Pt and the second Pt, and had an even smaller full width at half maximum, overlapped each other in the peak at 39.7°. In addition, it was conceived that three diffraction lines, that is, the diffraction line of the first $Pt_3Co$ having a relatively large full width at half maximum, the diffraction line of the second $Pt_3Co$, which was different in crystallite diameter from the first $Pt_3Co$ and had a smaller full width at half maximum, and the diffraction line of the third $Pt_3Co$, which was different in crystallite diameter from the first $Pt_3Co$ and the second $Pt_3Co$, and had an even smaller full width at half maximum, overlapped each other in the peak at 41.0°. In addition, it was conceived that the metal-supported catalyst had a diffraction line derived from carbon at a diffraction angle ($2\Theta$) in the vicinity of 43.5° because the catalyst included the carbon carrier.

In view of the foregoing, as shown in each of FIG. 6A and FIG. 6B, the diffraction line having a peak top at a position at which the diffraction angle ($2\Theta$) was 39.7°, and the diffraction line having a peak top at a position at which the diffraction angle ($2\Theta$) was 41.0° were separated into seven components including a peak derived from the first Pt, a peak derived from the second Pt, a peak derived from the third Pt, a peak derived from the first $Pt_3Co$, a peak derived from the second $Pt_3Co$, a peak derived from the third $Pt_3Co$, and a peak derived from carbon by the above-mentioned peak separation method.

In each of FIG. 6A and FIG. 6B, a diffraction line "after baseline correction" represents a diffraction line obtained by subjecting a diffraction line obtained by XRD measurement to the baseline correction, and the peak of "Pt(1)", the peak of "Pt(2)", the peak of "Pt(3)", the peak of "$Pt_3Co(1)$", the peak of "$Pt_3Co(2)$", the peak of "$Pt_3Co(3)$", and the peak of "carbon" represent the peak derived from the first Pt, the peak derived from the second Pt, the peak derived from the third Pt, the peak derived from the first $Pt_3Co$, the peak derived from the second $Pt_3Co$, the peak derived from the third $Pt_3Co$, and the peak derived from carbon, which are obtained by the peak separation of the diffraction lines "after baseline correction", respectively.

Then, the crystallite diameter of each of first Pt particles, second Pt particles, and third Pt particles, and first $Pt_3Co$ particles, second $Pt_3Co$ particles, and third $Pt_3Co$ particles was calculated from Scherrer's equation described above. That is, for example, the crystallite diameter of the first Pt particles was calculated by substituting the diffraction angle and full width at half maximum of the separated peak of "Pt(1)" in the XRD pattern shown in each of FIG. 6A and FIG. 6B into Scherrer's equation described above. As a result, the crystallite diameter of the first Pt particles was calculated to be 3.7 nm, the crystallite diameter of the second Pt particles was calculated to be 8.1 nm, the crystallite diameter of the third Pt particles was calculated to be 18.7 nm, the crystallite diameter of the first $Pt_3Co$ particles was calculated to be 5.7 nm, the crystallite diameter of the second $Pt_3Co$ particles was calculated to be 18.6 nm, and the crystallite diameter of the third $Pt_3Co$ particles was calculated to be 29.5 nm.

In addition, the peak area proportion (%) of each of the Pts and the $Pt_3Cos$ was calculated by: dividing each of the respective areas of the separated peaks of the three Pt particles and the three $Pt_3Co$ particles obtained by the above-mentioned peak separation (i.e., the peak area of "Pt(1)", the peak area of "Pt(2)", and the peak area of "Pt(3)", and the peak area of "$Pt_3Co(1)$", the peak area of "$Pt_3Co(2)$", and the peak area of "$Pt_3Co(3)$") by the total of the areas of the separated peaks of the three Pts and the three $Pt_3Cos$; and multiplying the answer by 100. As a result, the peak area proportion of the first Pt particles was calculated to be 17.3%, the peak area proportion of the second Pt particles was calculated to be 44.4%, the peak area proportion of the third Pt particles was calculated to be 17.7%, the peak area proportion of the first $Pt_3Co$ particles was calculated to be 8.7%, the peak area proportion of the second $Pt_3Co$ particles was calculated to be 5.8%, and the peak area proportion of the third $Pt_3Co$ particles was calculated to be 6.1%.

Then, the volume-average particle diameter of catalyst metal particles was calculated by weighted averaging using those peak area proportions as weights. Specifically, the volume-average particle diameter of the platinum alloy particles supported on the metal-supported catalyst of Example C2 was calculated to be 11.0 nm from the following equation: volume-average particle diameter (nm)=$\{(3.7\times17.3)+(8.1\times44.4)+(18.7\times17.7)+(5.7\times8.7)+(18.6\times5.8)+(29.5\times6.1)\}/(17.3+44.4+17.7+8.7+5.8+6.1)$.

Further, the number-average particle diameter of catalyst metal particles was calculated by weighted averaging using "peak area proportion/crystallite diameter$^3$" as a weight. Specifically, the number-average particle diameter of the $Pt_3Co$ particles supported on the metal-supported catalyst of Example C2 was calculated to be 4.9 nm from the following equation: number-average particle diameter (nm)=$\{(3.7\times17.3/3.7^3)+(8.1\times44.4/8.1^3)+(18.7\times17.7/18.7^3)+(5.7\times8.7/5.7^3)+(18.6\times5.8/18.6^3)+(29.5\times6.1/29.5^3)\}/(17.3/3.7^3+44.4/8.1^3+17.7/18.7^3+8.7/5.7^3+5.8/18.6^3+6.1/29.5^3)$ .

[ECSA-Sweep Rate Dependence]

The electrochemical effective specific surface area (ECSA) ($m^2$/g-Pt) of platinum in a metal-supported catalyst was evaluated by a rotating ring-disk electrode method including using a rotating ring-disk electrode apparatus (RRDE-3A Rotating Ring Disk Electrode Apparatus ver. 1.2, manufactured by BAS Inc.) and a dual electrochemical analyzer (CHI700C, manufactured by ALS Co., Ltd.).

That is, first, a rotating ring-disk electrode apparatus of a three-electrode system including a working electrode including the metal-supported catalyst was produced. Specifically, 5 mg of the metal-supported catalyst, 50 $\mu$L of 5% NAFION (trademark) (manufactured by Sigma-Aldrich, NAFION perfluorinated ion-exchange resin, 5% solution (product number: 510211)), 400 $\mu$L of water, and 100 $\mu$L of isopropyl alcohol were mixed to prepare a slurry. Next, the slurry was subjected to ultrasonic treatment for 10 minutes, and was then subjected to homogenizer treatment for 2 minutes. Then, the resultant slurry was applied to a working electrode (ring-disk electrode for RRDE-3A, platinum ring-gold disk electrode, disk diameter: 4 mm, manufactured by BAS Inc.) so that the application amount of the metal-supported catalyst became 0.1 mg/cm$^2$, and was dried to produce a working electrode carrying the metal-supported catalyst.

In addition, a platinum electrode (Pt counter electrode of 23 cm, manufactured by BAS Inc.) was used as a counter electrode, and a reversible hydrogen electrode (RHE) (storage type reversible hydrogen electrode, manufactured by EC Frontier Co., Ltd.) was used as a reference electrode. Thus, a rotating ring-disk electrode apparatus including the working electrode including the metal-supported catalyst, the platinum electrode serving as the counter electrode, and the reversible hydrogen electrode (RHE) serving as the reference electrode, was obtained. In addition, a 0.1 M aqueous solution of perchloric acid was used as an electrolytic solution.

Then, the ECSA was measured with the above-mentioned rotating ring-disk electrode apparatus. That is, cyclic voltammetry (CV) was performed with the rotating ring-disk electrode apparatus of a three-electrode system including the working electrode including the metal-supported catalyst in a nitrogen atmosphere.

In the CV, first, nitrogen bubbling was performed for 10 minutes to remove oxygen in the electrolytic solution. After that, a current density when a potential was swept in the potential range of from 0.0 V (vs. NHE) to 0.94 V (vs. NHE) at a sweep rate of 10 mV/sec was recorded as a function of the potential.

An ECSA at 10 mV (m$^2$/g-Pt) was obtained from a cyclic voltammogram thus obtained. Specifically, the ECSA was calculated on the basis of the following equation (VI) from a hydrogen adsorption electric quantity ($Q_{Hupd}$) (mC/cm$^2$) in the range of from 0.0 V (vs. NHE) to 0.4 V (vs. NHE) at the time of a negative scan in the cyclic voltammogram of a third cycle by using an area-equivalent electric quantity (210 $\mu$C/cm$^2$) and the application amount ($L_{Pt}$) (mg-Pt/cm$^2$) of platinum.

$$\mathrm{ECSA} = \frac{Q_{Hupd}}{210 \times L_{Pt}} \times 10^2 \qquad \mathrm{(VI)}$$

Similarly, an ECSA at 1,000 mV (m$^2$/g-Pt) at a sweep rate of 1,000 mV/sec was calculated. The ECSA-sweep rate dependence (%) of the metal-supported catalyst was calculated from the following equation (IV) by using the ECSA at 10 mV and the ECSA at 1,000 mV thus obtained. That is, a value, which was calculated by subtracting a value obtained by dividing the ECSA at 1,000 mV by the ECSA at 10 mV from 1, and multiplying the resultant value by 100, was obtained as the ECSA-sweep rate dependence (%).

ECSA-sweep rate dependence (%)= (1-ECSA at 1,000 mV/ECSA at 10 mV) $\times$ 100 $\qquad$ (IV)

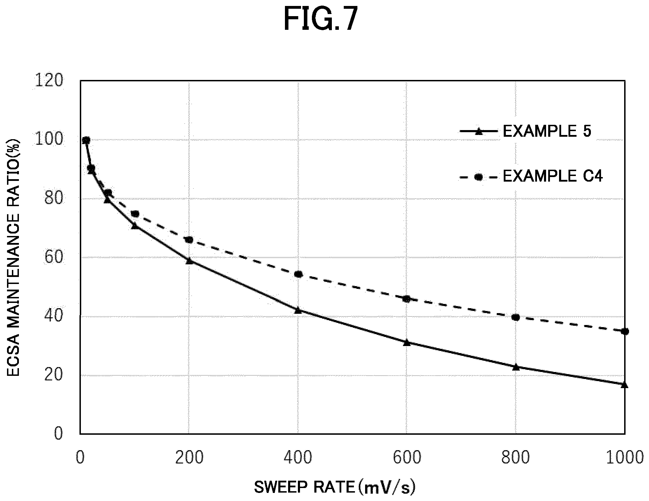

FIG. 7 shows the results of the evaluation of the ECSA-sweep rate dependence through use of the metal-supported catalyst of Example 5 and the metal-supported catalyst of Example C4. In FIG. 7, an axis of abscissa indicates a sweep rate (mV/sec), and an axis of ordinate indicates an ECSA maintenance ratio (%). The ECSA maintenance ratio was calculated by multiplying a value, which was obtained by dividing an ECSA at each sweep rate by the ECSA at 10 mV, by 100. That is, a value obtained by subtracting the ECSA maintenance ratio (%) at a sweep rate of 1,000 mV/sec on the axis of abscissa from 100 corresponds to the above-mentioned ECSA-sweep rate dependence (%).

As shown in FIG. 7, in the case where the metal-supported catalyst of Example C4 was used, a reduction in ECSA due to an increase in sweep rate was smaller than that in the case where the metal-supported catalyst of Example 5 was used. Accordingly, it was conceived that in the metal-supported catalyst of Example C4, a larger number of catalyst metal particles were supported outside the pores of its carbon carrier compared to the metal-supported catalyst of Example 5. That is, it was conceived that the metal-supported catalyst of Example C4 was produced by supporting the catalyst metal particles on the carbon carrier on the basis of the liquid-phase reduction method, and hence the catalyst metal particles were preferentially supported on the outer surface of the carbon carrier.

[Performance Evaluation of Battery including Electrode containing Metal-supported Catalyst]

The performance evaluation of a fuel cell including a cathode containing a metal-supported catalyst was performed. Specifically, first, a battery cathode having a catalyst layer containing a metal-supported catalyst formed thereon was produced. That is, such an amount of an electrolyte (equivalent weight EW=820) that the weight ratio thereof to a carbon carrier was 1.1 was added to 0.25 g of the metal-supported catalyst, and 2 g each of distilled water and 1-propanol were added thereto to prepare an electrolyte solution. The electrolyte solution and 25 g of balls were loaded into a pot and mixed with a ball mill at 200 rpm for 50 minutes. Thus, a slurry-like composition for a catalyst layer containing the uniformly dispersed metal-supported catalyst was obtained.

The resultant slurry-like composition for a catalyst layer was applied onto a region having an area of 5 cm$^2$ of a gas diffusion layer ("29BC", manufactured by SGL Carbon Japan Co., Ltd.) (2.3 cm$\times$2.3 cm) so that the content of platinum per unit area of the battery electrode became 0.2 (mg-Pt/cm$^2$), and was dried to form a catalyst layer on the gas diffusion layer. Thus, a battery electrode having the catalyst layer containing the metal-supported catalyst formed thereon was obtained.

Next, a fuel cell including the battery electrode having the catalyst layer containing the metal-supported catalyst formed thereon was produced. That is, the battery electrode including the catalyst layer (positive electrode catalyst layer) produced as described above was used as a positive electrode.

Meanwhile, a negative electrode was produced as described below. 0.5 g of a commercially available platinum-supported catalyst (Pt/C) including platinum particles supported on a carbon carrier (UNPC40-II, manufactured by Ishifuku Metal Industry Co., Ltd.), 10 g of 5% NAFION (trademark), 2 g of distilled water, and 25 g of balls were loaded into a pot, and were mixed with a ball mill at 200 rpm for 50 minutes to prepare a slurry-like Pt/C composition. A negative electrode including a catalyst layer (negative electrode catalyst layer) formed from the slurry-like Pt/C composition was produced in the same manner as in the above-mentioned positive electrode except that the Pt/C composition was applied onto the gas diffusion layer (5 cm$^2$) so that the content of platinum per unit area became 0.1 (mg-Pt/cm$^2$).

Then, a polymer electrolyte membrane ("NAFION (trademark) 211", manufactured by DuPont) was arranged between the above-mentioned positive electrode catalyst layer and the above-mentioned negative electrode catalyst layer, and the resultant was subjected to pressure bonding under the conditions of 150°C and 1 MPa for 3 minutes, to thereby produce a MEA. A pair of gaskets was bonded to the MEA, and the resultant MEA was sandwiched between a pair of separators, to thereby produce a fuel cell unit cell. After that, the unit cell produced as described above was installed in a fuel cell automatic evaluation system (manufactured by Toyo Corporation). First, a power generation test was performed, and then a durability test was performed.

In the power generation test, saturated humidified air (oxygen) was supplied at 2.5 L/min to the positive electrode side of the unit cell at a back pressure of 150 kPa (relative humidity: 100%), saturated humidified hydrogen was supplied at 1.0 L/min to the negative electrode side of the unit cell (relative humidity: 100%), a cell temperature was set to 75°C, and an open circuit voltage was measured for 5 minutes. After that, a cell current density was kept at each current density for 3 minutes from 4.0 A/cm$^2$ to 0 A/cm$^2$, and a cell voltage was measured.

Then, a voltage (mV) at a current density of 2.5 A/cm$^2$ was measured as an output characteristic. In addition, a voltage (mV) at a current density of 0.2 A/cm$^2$ was measured as catalytic activity. In addition, a voltage (mV) at a current density of 1.0 A/cm$^2$ was recorded as a voltage at the beginning of a start-stop test.

Next, the start-stop test was performed. That is, the start-stop test was performed as follows: the cell temperature was set to 80°C; saturated humidified nitrogen was supplied at 1.0 L/min to both the sides of the unit cell at a back pressure of 35 kPa (relative humidity: 100%), and saturated humidified hydrogen was supplied at 1.0 mL/min to the anode side thereof (relative humidity: 100%); and a triangular wave cycle in which a potential was scanned from 1.0 V to 1.5 V at a sweep rate of 500 mV/sec was repeated.

After the above-mentioned triangular wave cycle was performed 1,000 times, the power generation test was performed again, and a voltage (mV) at 1.0 A/cm$^2$ after the start-stop test was recorded. Then, a voltage loss (mV), which was a value obtained by subtracting the voltage (mV) at 1.0 A/cm$^2$ measured in the power generation test after the start-stop test (voltage (mV) after the 1,000 cycles) from the voltage (mV) at 1.0 A/cm$^2$ measured as initial performance in the power generation test before the start-stop test, was used as an indicator of durability in the first start-stop test.

A load fluctuation test was also performed. That is, as in the above-mentioned start-stop test, first, a voltage (mV) at a current density of 1.0 A/cm$^2$ was recorded as a voltage at the start of the load fluctuation test. After that, the load fluctuation test was performed as follows: the cell temperature was set to 75°C; saturated humidified nitrogen was supplied at 0.5 L/min to both the sides of the unit cell at a back pressure of 150 kPa (relative humidity: 100%), and saturated humidified hydrogen was supplied at 0.5 mL/min to the anode side thereof (relative humidity: 100%); and a rectangular wave cycle in which a potential was first kept at 0.6 V for 10 seconds and then kept at 0.95 V for 10 seconds was repeated.

After the above-mentioned rectangular wave cycle was performed 10,000 times, the power generation test was performed again, and a voltage (mV) at a current density of 1.0 A/cm$^2$ after the load fluctuation test was recorded. Then, a voltage loss (mV), which was a value obtained by subtracting the voltage (mV) at 1.0 A/cm$^2$ measured in the power generation test after the load fluctuation test (voltage (mV) after 10,000 cycles) from the voltage (mV) at 1.0 A/cm$^2$ measured as initial performance in the power generation test before the load fluctuation test, was used as an indicator of durability in the load fluctuation test.

[Evaluation of Ionic Resistance]

Impedance measurement was performed as described below. A cell temperature was set to 80°C, and saturated humidified nitrogen was supplied at 0.5 L/min to both the sides of a unit cell at a back pressure of 35 kPa (relative humidity: 100%), and saturated humidified hydrogen was supplied at 0.5 mL/min to the anode side thereof (relative humidity: 100%), followed by the measurement of an open circuit voltage for 10 minutes. After that, the measurement was performed with an electrochemical measuring system (VSP-300, manufactured by Bio-Logic Science Instruments) at an applied voltage of 450 mV, a measurement frequency of from 20 kHz to 50 mHz, and an amplitude voltage of $\pm 10$ mV.

An ionic resistance $R_i$ was determined by subjecting the Nyquist plots of measured values obtained by the measurement to fitting with ZView equivalent circuit analysis software (Scribner Associates).

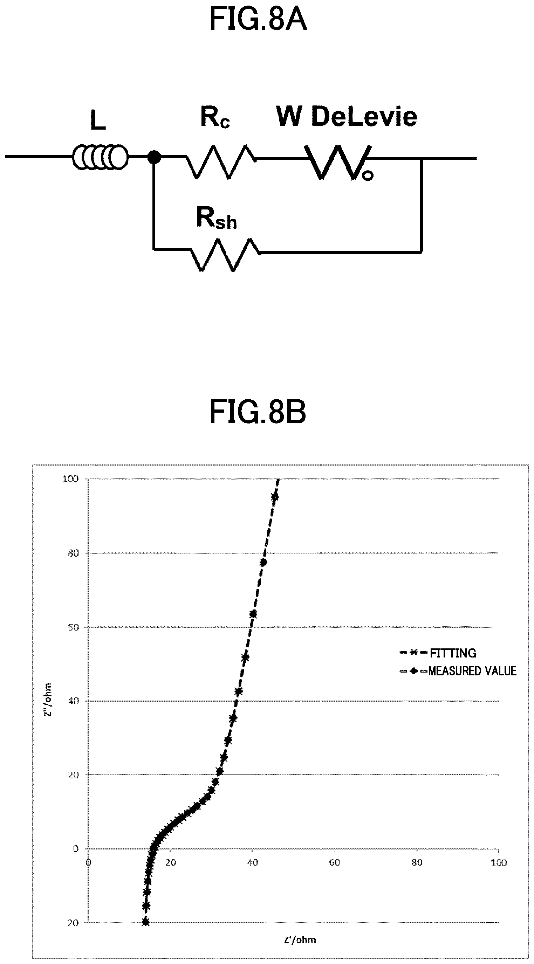

The state of an electrode under the above-mentioned measurement conditions can be modeled with an equivalent circuit illustrated in FIG. 8A. In the equivalent circuit, L represents an inductance derived from wiring or the like, $R_c$ represents the resistance of an electrolyte membrane or an electrode member, $R_{sh}$ represents a short-circuit resistance, and W DeLevie represents a Warburg impedance. At this time, the Warburg impedance $Z_w$ is represented by the following equation (VII).

$$Z_w = (R_i * \mathrm{cotanh}(T * \omega * j)^{0.5}) / (T * \omega * j)^{0.5} \qquad (VII)$$

Herein, in the equation (VII), T represents a time constant, and is defined as the product of the $R_i$ and a $C_{dl}$. $R_i$ represents an ionic resistance ($m\Omega \cdot cm^2$), and $C_{dl}$ represents an electric double layer capacity (F). $\omega$ represents a frequency (Hz). "j" represents an imaginary unit.

The $R_i$ was calculated by subjecting the Nyquist plots of the measured values to fitting with the equivalent circuit illustrated in FIG. 8A (reference: Journal of The Electrochemical Society, 157(3), B425-B436 (2010)). It is conceivable that the $R_i$ is derived mainly from the ionic resistance of a catalyst layer, and the ionic resistance is affected by the thickness of the catalyst layer, the hydrophilicity of the catalyst layer, and the extent to which an ionomer deteriorates.

FIG. 8B shows the measured values of the Nyquist plots obtained for Example 3 and the result of their fitting. As a result of the fitting, the ionic resistance $R_i$ was 54 $m\Omega \cdot cm^2$.

[Result]

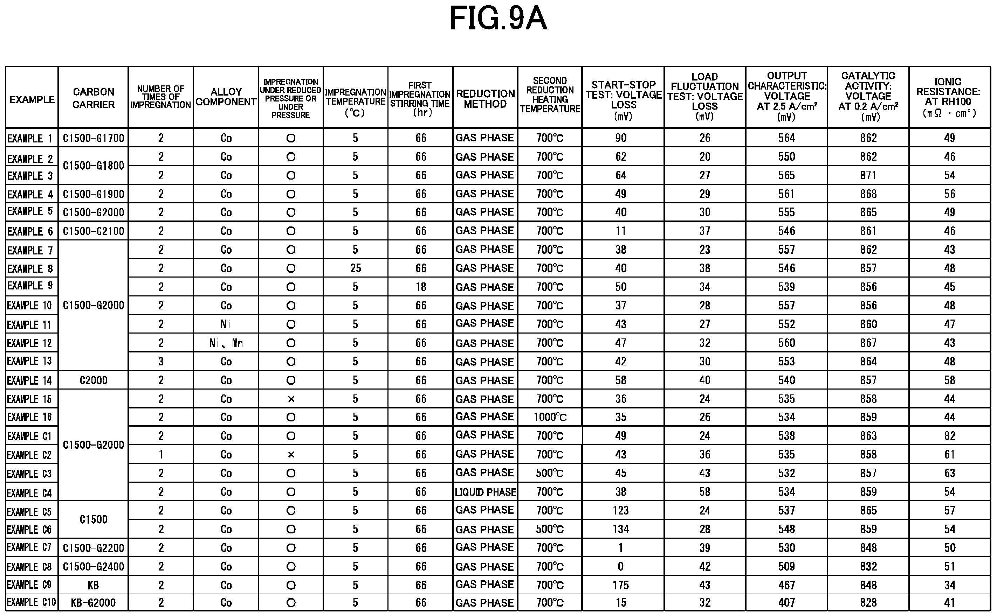

FIG. 9A shows conditions for the production of the metal-supported catalysts of Examples 1 to 16 and Examples C1 to C10, and the results of evaluations of the characteristics of fuel cells including the metal-supported catalysts.

In the start-stop test, as described above, a durability test was performed at a relatively high potential of from 1.0 V to 1.5 V. In the above-mentioned potential range, for example, the deterioration of a carbon carrier due to oxidation is liable to proceed. Accordingly, a smaller voltage loss in the start-stop test means that the durability of a metal-supported catalyst is higher.

In this respect, according to the voltage loss in the start-stop test shown in FIG. 9A, the durability of each of the metal-supported catalysts of Examples 1 to 16 was more excellent than that of each of Examples C5, C6, and C9, and was comparable to that of each of Examples C1 to C4, C7, C8, and C10. In addition, in the start-stop test, the durability of each of the metal-supported catalysts of Examples 2 to 16 was more excellent than that of Example 1, the durability of each of the metal-supported catalysts of Examples 4 to 16 was more excellent than that of each of Examples 2 and 3, and the durability of each of the metal-supported catalysts of Examples 4 to 8, 10 to 13, 15, and 16 was more excellent than that of each of Examples 9 and 14.

In the load fluctuation test, as described above, a durability test was performed at relatively low potentials of 0.6 V and 0.95 V. In the above-mentioned potential range, for example, the deterioration (e.g., aggregation and/or dissolution) of catalyst metal particles supported on a carbon carrier is liable to proceed. Accordingly, a smaller voltage loss in the load fluctuation test means that the durability of a metal-supported catalyst is higher.

In this respect, according to the voltage loss in the load fluctuation test shown in FIG. 9A, the durability of each of the metal-supported catalysts of Examples 1 to 16 was more excellent than that of each of Examples C3, C4, C8, and C9, and was comparable to that of each of Examples C1, C2, C5 to C7, and C10. In addition, in the load fluctuation test, the durability of each of the metal-supported catalysts of Examples 1 to 5, 7, 9 to 13, 15, and 16 was more excellent than that of each of Examples 6, 8, and 14.

A larger value of a voltage (mV) at a current density of 2.5 $A/cm^2$ representing the output characteristic of a metal-supported catalyst means that the output characteristic of the metal-supported catalyst is more excellent. That is, in a high-current density region of 2.0 $A/cm^2$ or more, a large amount of water is produced, and hence the produced water is filled into the pores of a carbon carrier to inhibit substance transport. As a result, a voltage serving as the performance of a battery is liable to reduce.

In this respect, according to FIG. 9A, the output characteristics of the metal-supported catalysts of Examples 1 to 16 were more excellent than those of Examples C8 to C10, and were comparable to those of Examples C1 to C7. In addition, the output characteristics of Examples 1 to 8 and 10 to 13 were more excellent than those of Examples 9 and 14 to 16, and the output characteristics of Examples 1 to 5, 7, and 10 to 13 were more excellent than those of Examples 6 and 8.

A larger value of a voltage (mV) at a current density of 0.2 A/cm$^2$ representing the catalytic activity of a metal-supported catalyst means that the catalytic activity of the metal-supported catalyst is more excellent. That is, while the overvoltages of a fuel cell are classified into an activation overvoltage, a resistance overvoltage, and a diffusion overvoltage, the low-current density region of 0.2 A/cm$^2$ is suitable for the evaluation of the catalytic activity because the influences of the resistance overvoltage and the diffusion overvoltage are small in the low-current density region of 0.2 A/cm$^2$.

In this respect, according to FIG. 9A, the catalytic activity of each of the metal-supported catalysts of Examples 1 to 16 was more excellent than that of each of Examples C7 to C10, and was comparable to that of each of Examples C1 to C6. In addition, the catalytic activity of each of Examples 1 to 7 and 11 to 13 was more excellent than that of each of Examples 8 to 10 and 14 to 16.

A smaller value of an ionic resistance means that the proton conductivity of a catalyst layer is higher. The ionic resistance may be affected by, for example, the thickness of the catalyst layer, the hydrophilicity of the catalyst layer, and the extent to which an ionomer deteriorates. In a catalyst layer containing a metal-supported catalyst, its ionic resistance is preferably as small as possible.

In this respect, according to FIG. 9A, the ionic resistances of the metal-supported catalysts of Examples 1 to 16 were smaller than those of Examples C1 to C3, and were comparable to those of Examples C4 to C10. In addition, the ionic resistances of Examples 1, 2, 5 to 13, 15, and 16 were smaller than those of Examples 3, 4, and 14.

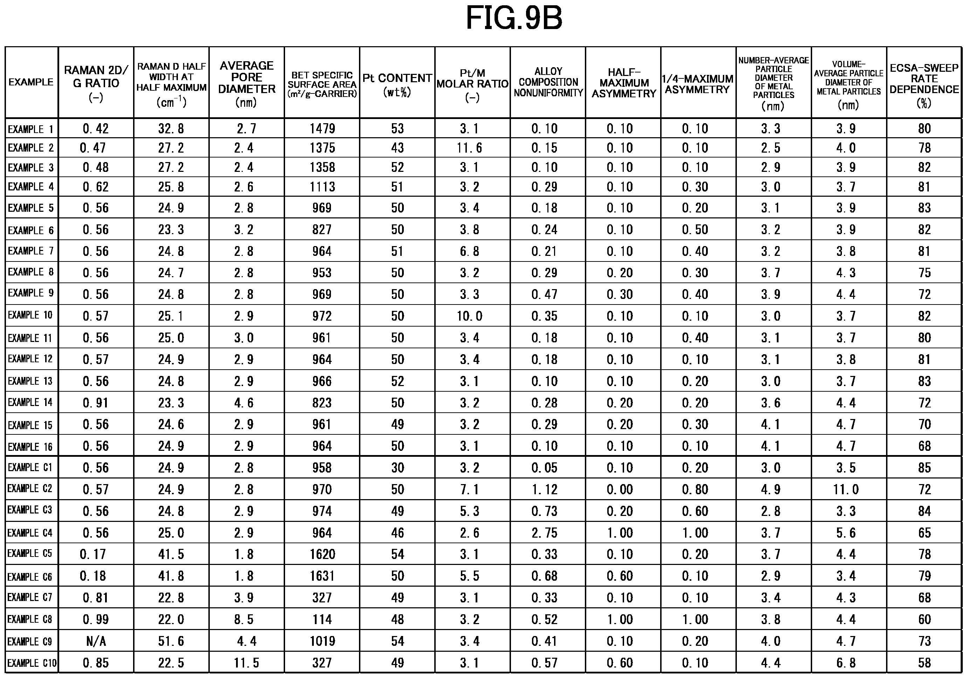

FIG. 9B shows the results of the evaluations of the characteristics of the metal-supported catalysts of the respective examples. The metal-supported catalysts of Examples 1 to 16 were larger in Raman 2D/G ratio than those of Examples C5 and C6, and the catalysts were comparable therein to those of Examples C1 to C4 and C8, and had Raman 2D/G ratios smaller than that of Example C8. In addition, the metal-supported catalysts of Examples 2 to 16 had Raman 2D/G ratios larger than that of Example 1, and the metal-supported catalysts of Examples 4 to 13, 15, and 16 had Raman 2D/G ratios larger than those of Examples 2 and 3. In addition, the metal-supported catalysts of Examples 1 to 13, 15, and 16 had Raman 2D/G ratios smaller than that of Example 14.

The metal-supported catalysts of Examples 1 to 16 were larger in Raman D half width at half maximum than those of Examples C7, C8, and C10, and the catalysts were comparable therein to those of Examples C1 to C4, and had Raman D half widths at half maximum smaller than those of Examples C5, C6, and C9. In addition, the metal-supported catalysts of Examples 2 to 16 had Raman D half widths at half maximum smaller than that of Example 1, and the metal-supported catalysts of Examples 4 to 16 had Raman D half widths at half maximum smaller than those of Examples 2 and 3. In addition, the metal-supported catalysts of Examples 1 to 5, 7 to 13, 15, and 16 had Raman D half widths at half maximum larger than those of Examples 6 and 14.

The metal-supported catalysts of Examples 1 to 16 were larger in average pore diameter than those of Examples C5 and C6, and the catalysts were comparable therein to those of Examples C1 to C4, C7, and C9, and had average pore diameters smaller than those of Examples C8 and C10. In addition, the metal-supported catalysts of Examples 1 to 13, 15, and 16 had average pore diameters smaller than that of Example 14, and the metal-supported catalysts of Examples 1 to 5, 7 to 13, 15, and 16 had average pore diameters smaller than that of Example 6.

The metal-supported catalysts of Examples 1 to 16 were larger in BET specific surface area than those of Examples C7, C8, and C10, and the catalysts were comparable therein to those of Examples C1 to C4 and C9, and had BET specific surface areas smaller than those of Examples C5 and C6. In addition, the metal-supported catalysts of Examples 1 to 5, 7 to 13, 15, and 16 had BET specific surface areas larger than those of Examples 6 and 14.

The metal-supported catalysts of Examples 1 to 16 were larger in platinum content than that of Example C1, and the catalysts had platinum contents comparable to those of Examples C2 to C10. In addition, the metal-supported catalysts of Examples 1 and 3 to 16 had platinum contents larger than that of Example 2.

With regard to a platinum/non-platinum metal (Pt/M) molar ratio, the metal-supported catalysts of Examples 1 to 16 had platinum/non-platinum metal molar ratios comparable to those of Examples C1 to C10. In addition, the metal-supported catalysts of Examples 1, 3 to 9, and 11 to 16 had platinum/non-platinum metal molar ratios smaller than those of Examples 2 and 10.

The metal-supported catalysts of Examples 1 to 16 were comparable in alloy composition nonuniformity to those of Examples C1, C5, and C7 to C9, and had alloy composition nonuniformities smaller than those of Examples C2 to C4, C6, and C10. In addition, the metal-supported catalysts of Examples 1 to 8 and 10 to 16 had alloy composition nonuniformities smaller than that of Example 9.

The metal-supported catalysts of Examples 1 to 16 were comparable in half-maximum asymmetry to those of Examples C1 to C3, C5, C7, and C9, and had half-maximum asymmetries smaller than those of Examples C4, C6, C8, and C10. In addition, the metal-supported catalysts of Examples 1 to 8 and 10 to 16 had half-maximum asymmetries smaller than that of Example 9, and the metal-supported catalysts of Examples 1 to 7, 10 to 13, and 16 had half-maximum asymmetries smaller than those of Examples 8, 14, and 15.

The metal-supported catalysts of Examples 1 to 16 were comparable in 1/4-maximum asymmetry to those of Examples C1, C5 to C7, C9, and C10, and had 1/4-maximum asymmetries smaller than those of Examples C2 to C4 and C8. In addition, the metal-supported catalysts of Examples 1 to 5 and 7 to 16 had 1/4-maximum asymmetries smaller than that of Example 6.

With regard to the number-average particle diameter of catalyst metal particles, the metal-supported catalysts of Examples 1 to 16 had number-average particle diameters comparable to those of Examples C1 to C10. In addition, the metal-supported catalysts of Examples 1 to 14 had number-average particle diameters smaller than those of Examples 15 and 16, and the metal-supported catalysts of Examples 1 to 7 and 10 to 13 had number-average particle diameters smaller than those of Examples 8, 9, and 14.

The metal-supported catalysts of Examples 1 to 16 were comparable in volume-average particle diameter of catalyst metal particles to those of Examples C1, C3, and C5 to C9, and had volume-average particle diameters smaller than those of Examples C2, C4, and C10. In addition, the metal-supported catalysts of Examples 1 to 14 had volume-average particle diameters smaller than those of Examples 15 and 16, and the metal-supported catalysts of Examples 1 to 7 and 10 to 13 had volume-average particle diameters smaller than those of Examples 8, 9, and 14.

The metal-supported catalysts of Examples 1 to 16 were larger in ECSA-sweep rate dependence than those of Example C8 and Example C10 were, and the catalysts had ECSA-sweep rate dependences comparable to those of Examples C1 to C7 and C9. In addition, the metal-supported catalysts of Examples 1 to 15 had ECSA-sweep rate dependences larger than that of Example 16, and the metal-supported catalysts of Examples 1, 3 to 7, and 10 to 13 had ECSA-sweep rate dependences larger than those of Examples 2, 8, 9, 14, and 15.

## Claims

1.  A metal-supported catalyst, comprising:

    a carbon carrier; and
    catalyst metal particles supported on the carbon carrier, the particles each containing a noble metal alloy,
    wherein a ratio of a weight of a noble metal to a weight of the metal-supported catalyst is 35 wt% or more,
    wherein the metal-supported catalyst has a BET specific surface area of 350 ($m^2$/g-carbon carrier) or more, and
    wherein the metal-supported catalyst has
    the following characteristic (a1) and/or (a2):

    (a1) a ratio of an intensity of a 2D band having a peak top in a vicinity of a Raman shift of 2,680 $cm^{-1}$ to an intensity of a G band having a peak top in a vicinity of a Raman shift of 1,600 $cm^{-1}$ in a Raman spectrum obtained by Raman spectroscopy is 0.20 or more and 1.00 or less; and
    (a2) a half width at half maximum of a D band having a peak top in a vicinity of a Raman shift of 1,340 $cm^{-1}$ in the Raman spectrum obtained by the Raman spectroscopy is 41.0 $cm^{-1}$ or less, and

    the following characteristic (b1) and/or (b2):

    (b1) an alloy composition nonuniformity, which is calculated from the following equation (I), is 0.55 or less:

    alloy composition nonuniformity= (1-theoretical lattice constant/ measured lattice constant) $\times$100      (I)
    -->

    in the equation (I), the theoretical lattice constant and the measured lattice constant are a theoretical lattice constant and a measured lattice constant of the noble metal alloy, respectively; and
    (b2) a half-maximum asymmetry and a 1/4-maximum asymmetry, which are respectively calculated from the following equation (II) and equation (III), are each 0.55 or less:

    $$\text{half-maximum asymmetry} = |(D_m - D_{Lh}) - (D_{Hh} - D_m)| \qquad (II)$$

    $$\text{1/4-maximum asymmetry} = |(D_m - D_{Lq}) - (D_{Hq} - D_m)| \qquad (III)$$

in the equation (II) and the equation (III), $D_m$ represents a value of a diffraction angle 2θ at which a diffraction line exhibits a maximum intensity in a range of the diffraction angle 20 in which a diffraction peak of a (111) plane of the noble metal alloy appears in an X-ray diffraction pattern obtained by powder X-ray diffraction, $D_{Lh}$ represents a value of a smallest diffraction angle 2Θ among diffraction angles 2θ at which the diffraction line exhibits an intensity equal to one half of the maximum intensity in the range, $D_{Hh}$ represents a value of a largest diffraction angle 2Θ among the diffraction angles 2Θ at which the diffraction line exhibits the intensity equal to one half of the maximum intensity in the range, $D_{Lq}$ represents a value of a smallest diffraction angle 2Θ among diffraction angles 2Θ at which the diffraction line exhibits an intensity equal to one quarter of the maximum intensity in the range, and $D_{Hq}$ represents a value of a largest diffraction angle 2Θ among the diffraction angles 2Θ at which the diffraction line exhibits the intensity equal to one quarter of the maximum intensity in the range.

2. The metal-supported catalyst according to claim 1, wherein the metal-supported catalyst has the characteristic (a1) as the characteristic (a).

3. The metal-supported catalyst according to claim 1 or 2, wherein the metal-supported catalyst has the characteristic (a2) as the characteristic (a).

4. The metal-supported catalyst according to any one of claims 1 to 3, wherein the metal-supported catalyst has the characteristic (d1) as the characteristic (d).

5. The metal-supported catalyst according to any one of claims 1 to 4, wherein the metal-supported catalyst has the characteristic (d2) as the characteristic (d).

6. The metal-supported catalyst according to any one of claims 1 to 5, wherein the metal-supported catalyst has an average pore diameter of 8.0 nm or less.

7. The metal-supported catalyst according to any one of claims 1 to 6, wherein the metal-supported catalyst has a noble metal-to-non-noble metal molar ratio of 1.0 or more.

8. The metal-supported catalyst according to any one of claims 1 to 7, wherein the catalyst metal particles have a number-average particle diameter of 8.0 nm or less.

9. The metal-supported catalyst according to any one of claims 1 to 8, wherein the catalyst metal particles have a volume-average particle diameter of 8.0 nm or less.

10. The metal-supported catalyst according to any one of claims 1 to 9, wherein the noble metal in the metal-supported catalyst has a dependence on a sweep rate of an electrochemical effective specific surface area (ECSA) of 60% or more, which is calculated from the following equation (IV):

ECSA-sweep rate dependence (%)= (1-ECSA at 1, 000 mV/ECSA at 10 mV) × 100          (IV)

in the equation (IV), the "ECSA at 1,000 mV" and the "ECSA at 10 mV" represent electrochemical effective specific surface areas ($m^2$/g-noble metal) per 1 g of the noble metal in the metal-supported catalyst, which are respectively obtained by cyclic voltammetry in which a potential is swept at a sweep rate of 1,000 mV/sec and cyclic voltammetry in which the potential is swept at a sweep rate of 10 mV/sec, using a rotating ring-disk electrode apparatus having a working electrode carrying the metal-supported catalyst.

11. An electrode, comprising the metal-supported catalyst of any one of claims 1 to 10.

12. A battery, comprising the electrode of claim 11.

FIG.1

EP 4 487 951 A1

FIG.2

# FIG.3A

# FIG.3B

# FIG.4A

# FIG.4B

# FIG.5A

# FIG.5B

# FIG.5C

# FIG.5D

# FIG.6A

# FIG.6B

# FIG.7

# FIG.8A

# FIG.8B

# FIG.9A

| EXAMPLE | CARBON CARRIER | NUMBER OF TIMES OF IMPREGNATION | ALLOY COMPONENT | IMPREGNATION UNDER REDUCED PRESSURE OR UNDER PRESSURE | IMPREGNATION TEMPERATURE (°C) | FIRST IMPREGNATION STIRRING TIME (hr) | REDUCTION METHOD | SECOND REDUCTION HEATING TEMPERATURE | START-STOP TEST: VOLTAGE LOSS (mV) | LOAD FLUCTUATION TEST: VOLTAGE LOSS (mV) | OUTPUT CHARACTERISTIC: VOLTAGE AT 2.5 A/cm² (mV) | CATALYTIC ACTIVITY: VOLTAGE AT 0.2 A/cm² (mV) | IONIC RESISTANCE: AT RH100 (mΩ·cm²) |
|---|---|---|---|---|---|---|---|---|---|---|---|---|---|
| EXAMPLE 1 | C1500-G1700 | 2 | Co | O | 5 | 66 | GAS PHASE | 700°C | 90 | 26 | 564 | 862 | 49 |
| EXAMPLE 2 | C1500-G1800 | 2 | Co | O | 5 | 66 | GAS PHASE | 700°C | 62 | 20 | 550 | 862 | 46 |
| EXAMPLE 3 | | 2 | Co | O | 5 | 66 | GAS PHASE | 700°C | 64 | 27 | 565 | 871 | 54 |
| EXAMPLE 4 | C1500-G1900 | 2 | Co | O | 5 | 66 | GAS PHASE | 700°C | 49 | 29 | 561 | 868 | 56 |
| EXAMPLE 5 | C1500-G2000 | 2 | Co | O | 5 | 66 | GAS PHASE | 700°C | 40 | 30 | 555 | 865 | 49 |
| EXAMPLE 6 | C1500-G2100 | 2 | Co | O | 5 | 66 | GAS PHASE | 700°C | 11 | 37 | 546 | 861 | 46 |
| EXAMPLE 7 | | 2 | Co | O | 5 | 66 | GAS PHASE | 700°C | 38 | 23 | 557 | 862 | 43 |
| EXAMPLE 8 | | 2 | Co | O | 25 | 66 | GAS PHASE | 700°C | 40 | 38 | 546 | 857 | 48 |
| EXAMPLE 9 | | 2 | Co | O | 5 | 18 | GAS PHASE | 700°C | 50 | 34 | 539 | 856 | 45 |
| EXAMPLE 10 | C1500-G2000 | 2 | Co | O | 5 | 66 | GAS PHASE | 700°C | 37 | 28 | 557 | 856 | 48 |
| EXAMPLE 11 | | 2 | Ni | O | 5 | 66 | GAS PHASE | 700°C | 43 | 27 | 552 | 860 | 47 |
| EXAMPLE 12 | | 2 | Ni、Mn | O | 5 | 66 | GAS PHASE | 700°C | 47 | 32 | 560 | 867 | 43 |
| EXAMPLE 13 | | 3 | Co | O | 5 | 66 | GAS PHASE | 700°C | 42 | 30 | 553 | 864 | 48 |
| EXAMPLE 14 | C2000 | 2 | Co | O | 5 | 66 | GAS PHASE | 700°C | 58 | 40 | 540 | 857 | 58 |
| EXAMPLE 15 | | 2 | Co | × | 5 | 66 | GAS PHASE | 700°C | 36 | 24 | 535 | 858 | 44 |
| EXAMPLE 16 | | 2 | Co | O | 5 | 66 | GAS PHASE | 1000°C | 35 | 26 | 534 | 859 | 44 |
| EXAMPLE C1 | C1500-G2000 | 2 | Co | O | 5 | 66 | GAS PHASE | 700°C | 49 | 24 | 538 | 863 | 82 |
| EXAMPLE C2 | | 1 | Co | × | 5 | 66 | GAS PHASE | 700°C | 43 | 36 | 535 | 858 | 61 |
| EXAMPLE C3 | | 2 | Co | O | 5 | 66 | GAS PHASE | 500°C | 45 | 43 | 532 | 857 | 63 |
| EXAMPLE C4 | | 2 | Co | O | 5 | 66 | LIQUID PHASE | 700°C | 38 | 58 | 534 | 859 | 54 |
| EXAMPLE C5 | C1500 | 2 | Co | O | 5 | 66 | GAS PHASE | 700°C | 123 | 24 | 537 | 865 | 57 |
| EXAMPLE C6 | | 2 | Co | O | 5 | 66 | GAS PHASE | 500°C | 134 | 28 | 548 | 859 | 54 |
| EXAMPLE C7 | C1500-G2200 | 2 | Co | O | 5 | 66 | GAS PHASE | 700°C | 1 | 39 | 530 | 848 | 50 |
| EXAMPLE C8 | C1500-G2400 | 2 | Co | O | 5 | 66 | GAS PHASE | 700°C | 0 | 42 | 509 | 832 | 51 |
| EXAMPLE C9 | KB | 2 | Co | O | 5 | 66 | GAS PHASE | 700°C | 175 | 43 | 467 | 848 | 34 |
| EXAMPLE C10 | KB-G2000 | 2 | Co | O | 5 | 66 | GAS PHASE | 700°C | 15 | 32 | 407 | 828 | 41 |

EP 4 487 951 A1

# FIG.9B

| EXAMPLE | RAMAN 2D/G RATIO (−) | RAMAN D HALF WIDTH AT HALF MAXIMUM (cm⁻¹) | AVERAGE PORE DIAMETER (nm) | BET SPECIFIC SURFACE AREA (m²/g-CARRIER) | Pt CONTENT (wt%) | Pt/M MOLAR RATIO (−) | ALLOY COMPOSITION NONUNIFORMITY | HALF-MAXIMUM ASYMMETRY | 1/4-MAXIMUM ASYMMETRY | NUMBER-AVERAGE PARTICLE DIAMETER OF METAL PARTICLES (nm) | VOLUME-AVERAGE PARTICLE DIAMETER OF METAL PARTICLES (nm) | ECSA-SWEEP RATE DEPENDENCE (%) |
|---|---|---|---|---|---|---|---|---|---|---|---|---|
| EXAMPLE 1 | 0.42 | 32.8 | 2.7 | 1479 | 53 | 3.1 | 0.10 | 0.10 | 0.10 | 3.3 | 3.9 | 80 |
| EXAMPLE 2 | 0.47 | 27.2 | 2.4 | 1375 | 43 | 11.6 | 0.15 | 0.10 | 0.10 | 2.5 | 4.0 | 78 |
| EXAMPLE 3 | 0.48 | 27.2 | 2.4 | 1358 | 52 | 3.1 | 0.10 | 0.10 | 0.10 | 2.9 | 3.9 | 82 |
| EXAMPLE 4 | 0.62 | 25.8 | 2.6 | 1113 | 51 | 3.2 | 0.29 | 0.10 | 0.30 | 3.0 | 3.7 | 81 |
| EXAMPLE 5 | 0.56 | 24.9 | 2.8 | 969 | 50 | 3.4 | 0.18 | 0.10 | 0.20 | 3.1 | 3.9 | 83 |
| EXAMPLE 6 | 0.56 | 23.3 | 3.2 | 827 | 50 | 3.8 | 0.24 | 0.10 | 0.50 | 3.2 | 3.9 | 82 |
| EXAMPLE 7 | 0.56 | 24.8 | 2.8 | 964 | 51 | 6.8 | 0.21 | 0.10 | 0.40 | 3.2 | 3.8 | 81 |
| EXAMPLE 8 | 0.56 | 24.7 | 2.8 | 953 | 50 | 3.2 | 0.29 | 0.20 | 0.30 | 3.7 | 4.3 | 75 |
| EXAMPLE 9 | 0.56 | 24.8 | 2.8 | 969 | 50 | 3.3 | 0.47 | 0.30 | 0.40 | 3.9 | 4.4 | 72 |
| EXAMPLE 10 | 0.57 | 25.1 | 2.9 | 972 | 50 | 10.0 | 0.35 | 0.10 | 0.10 | 3.0 | 3.7 | 82 |
| EXAMPLE 11 | 0.56 | 25.0 | 3.0 | 961 | 50 | 3.4 | 0.18 | 0.10 | 0.40 | 3.1 | 3.7 | 80 |
| EXAMPLE 12 | 0.57 | 24.9 | 2.9 | 964 | 50 | 3.4 | 0.18 | 0.10 | 0.10 | 3.1 | 3.8 | 81 |
| EXAMPLE 13 | 0.56 | 24.8 | 2.9 | 966 | 52 | 3.1 | 0.10 | 0.10 | 0.20 | 3.0 | 3.7 | 83 |
| EXAMPLE 14 | 0.91 | 23.3 | 4.6 | 823 | 50 | 3.2 | 0.28 | 0.20 | 0.20 | 3.6 | 4.4 | 72 |
| EXAMPLE 15 | 0.56 | 24.6 | 2.9 | 961 | 49 | 3.2 | 0.29 | 0.20 | 0.30 | 4.1 | 4.7 | 70 |
| EXAMPLE 16 | 0.56 | 24.9 | 2.9 | 964 | 50 | 3.1 | 0.10 | 0.10 | 0.10 | 4.1 | 4.7 | 68 |
| EXAMPLE C1 | 0.56 | 24.9 | 2.8 | 958 | 30 | 3.2 | 0.05 | 0.10 | 0.20 | 3.0 | 3.5 | 85 |
| EXAMPLE C2 | 0.57 | 24.9 | 2.8 | 970 | 50 | 7.1 | 1.12 | 0.00 | 0.80 | 4.9 | 11.0 | 72 |
| EXAMPLE C3 | 0.56 | 24.8 | 2.9 | 974 | 49 | 5.3 | 0.73 | 0.20 | 0.60 | 2.8 | 3.3 | 84 |
| EXAMPLE C4 | 0.56 | 25.0 | 2.9 | 964 | 46 | 2.6 | 2.75 | 1.00 | 1.00 | 3.7 | 5.6 | 65 |
| EXAMPLE C5 | 0.17 | 41.5 | 1.8 | 1620 | 54 | 3.1 | 0.33 | 0.10 | 0.20 | 3.7 | 4.4 | 78 |
| EXAMPLE C6 | 0.18 | 41.8 | 1.8 | 1631 | 50 | 5.5 | 0.68 | 0.60 | 0.10 | 2.9 | 3.4 | 79 |
| EXAMPLE C7 | 0.81 | 22.8 | 3.9 | 327 | 49 | 3.1 | 0.33 | 0.10 | 0.10 | 3.4 | 4.3 | 68 |
| EXAMPLE C8 | 0.99 | 22.0 | 8.5 | 114 | 48 | 3.2 | 0.52 | 1.00 | 1.00 | 3.8 | 4.4 | 60 |
| EXAMPLE C9 | N/A | 51.6 | 4.4 | 1019 | 54 | 3.4 | 0.41 | 0.10 | 0.20 | 4.0 | 4.7 | 73 |
| EXAMPLE C10 | 0.85 | 22.5 | 11.5 | 327 | 49 | 3.1 | 0.57 | 0.60 | 0.10 | 4.4 | 6.8 | 58 |

EP 4 487 951 A1

## INTERNATIONAL SEARCH REPORT

International application No.

**PCT/JP2022/023284**

### A. CLASSIFICATION OF SUBJECT MATTER

*B01J 27/24*(2006.01)i; *B01J 23/89*(2006.01)i; *C01B 32/05*(2017.01)i; *C01B 32/205*(2017.01)i; *C25B 11/054*(2021.01)i; *C25B 11/065*(2021.01)i; *C25B 11/081*(2021.01)i; *H01M 4/86*(2006.01)i; *H01M 4/90*(2006.01)i; *H01M 8/10*(2016.01)i; *H01M 12/06*(2006.01)i

FI:   B01J27/24 M; B01J23/89 M; C01B32/05; C01B32/205; C25B11/054; C25B11/065; C25B11/081; H01M4/86 B; H01M4/90 M; H01M8/10 101; H01M12/06 F

According to International Patent Classification (IPC) or to both national classification and IPC

### B. FIELDS SEARCHED

Minimum documentation searched (classification system followed by classification symbols)

B01J27/24; B01J23/89; C01B32/05; C01B32/205; C25B11/054; C25B11/065; C25B11/081; H01M4/86; H01M4/90; H01M8/10; H01M12/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/024658 A1 (NISSHINBO HOLDINGS INC) 11 February 2021 (2021-02-11) entire text, all drawings | 1-12 |
| A | WO 2021/024656 A1 (NISSHINBO HOLDINGS INC) 11 February 2021 (2021-02-11) entire text, all drawings | 1-12 |
| A | WO 2021/024657 A1 (NISSHINBO HOLDINGS INC) 11 February 2021 (2021-02-11) entire text, all drawings | 1-12 |
| A | WO 2013/129417 A1 (NISSAN MOTOR CO., LTD.) 06 September 2013 (2013-09-06) entire text, all drawings | 1-12 |
| A | JP 2020-500096 A (KOLON INDUSTRIES, INC.) 09 January 2020 (2020-01-09) entire text, all drawings | 1-12 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 August 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2022/023284**

| Patent document cited in search report | | | Publication date (day/month/year) | Patent family member(s) | | | Publication date (day/month/year) |
|---|---|---|---|---|---|---|---|
| WO | 2021/024658 | A1 | 11 February 2021 | JP | 2021-23874 | A | |
| WO | 2021/024656 | A1 | 11 February 2021 | JP | 2021-23872 | A | |
| WO | 2021/024657 | A1 | 11 February 2021 | JP | 2021-23873 | A | |
| WO | 2013/129417 | A1 | 06 September 2013 | US | 2015/0030966 | A1 | |
| | | | | entire text, all drawings | | | |
| | | | | EP | 2822069 | A1 | |
| | | | | CN | 104145360 | A | |
| JP | 2020-500096 | A | 09 January 2020 | US | 2020/0028183 | A1 | |
| | | | | entire text, all drawings | | | |
| | | | | WO | 2018/062769 | A1 | |
| | | | | EP | 3520892 | A1 | |
| | | | | KR | 10-2018-0036107 | A | |
| | | | | CN | 109789386 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003142112 A
- WO 2016063968 A1
- WO 2017183475 A1
- JP 2018116815 A
- JP 2020171917 A

**Non-patent literature cited in the description**

- **A. SADEZKY et al.** *Carbon*, 2005, vol. 43, 1731-1742
- *Journal of The Electrochemical Society*, 2010, vol. 157 (3), B425-B436